# EUROPÄISCHE PATENTSCHRIFT

(11) **EP 2 493 962 B1**
(45) Veröffentlichungstag und Bekanntmachung des Hinweises auf die Patenterteilung: **18.09.2013**
(21) Anmeldenummer: 10763727.4
(22) Anmeldetag: 14.10.2010
(51) Int. Cl.: C08G 77/16

(54) **VERFAHREN ZUR HERSTELLUNG VON (HYDROXYMETHYL)POLYSILOXANEN**
METHOD FOR PRODUCING (HYDROXYMETHYL)POLYSILOXANES
PROCÉDÉ DE PRODUCTION D'(HYDROXYMÉTHYL)POLYSILOXANES

(30) Priorität: 30.10.2009 DE 102009046254
(43) Veröffentlichungstag der Anmeldung: 05.09.2012
(73) Patentinhaber: Wacker Chemie AG, 81737 München (DE)
(72) Erfinder: DAISS, Jürgen, Oliver, 81373 München (DE); CREMER, Jens, 81379 München (DE); FRITZ-LANGHALS, Elke, 85521 Ottobrunn (DE); JUNGERMANN, Steffen, 81379 München (DE)
(74) Vertreter: Fritz, Helmut
(86) Internationale Anmeldenummer: PCT/EP2010/065451
(87) Internationale Veröffentlichungsnummer: WO 2011/051108

(56) Entgegenhaltungen:
- DE-A1- 10 109 842
- DE-B- 1 227 456

## Beschreibung

Die vorliegende Erfindung betrifft ein Verfahren zur Herstellung von (Hydroxymethyl)polysiloxanen und (Hydroxymethyl)polysiloxanharzen.

(Hydroxyalkyl)polysiloxane und (Hydroxyalkyl)polysiloxanharze besitzen als Strukturelement Einheiten der Formel

Siloxan-(SiRⁱ₂) -Rⁱⁱ-OH,

wobei Rⁱ ein Alkyl- oder ein Arylrest, in der Regel ein Methylrest, und Rⁱⁱ ein Kohlenwasserstoffrest ist, der Heteratome enthalten oder mit Heteroatomen substitiert sein kann und der über ein Kohlenstoffatom an das Siliciumatom in der Gruppe (SiRⁱ₂) gebunden ist. Die Anwesenheit von Rⁱⁱ zwischen dem Siliciumatom und der dargestellten OH-Gruppe bewirkt, dass die OH-Gruppe hydrolysestabil an das Siloxangerüst gebunden ist. Wird die OH-Gruppe mit anderen Verbindungen umgesetzt, so sind die resultierenden Produkte ebenfalls hydrolysestabil an das Siloxangerüst gebunden.

Die Gruppe Rⁱⁱ ist dabei ein strukturgebender Faktor, der sowohl die Eigenschaften des (Hydroxyalkyl)polysiloxans bzw. des (Hydroxyalkyl)polysiloxanharzes als auch die Eigenschaften von Folgeprodukten, die unter Verwendung des (Hydroxyalkyl)polysiloxans bzw. des (Hydroxyalkyl)polysiloxanharzes herstellbar sind, mitbestimmt. Vor allem die Beweglichkeit von Rⁱⁱ als auch der organische Charakter von Rⁱⁱ beeinflusst diese Eigenschaften. Wenn beispielsweise die Beweglichkeit von Rⁱⁱ und/oder der organische Charakter eines (Hydroxyalkyl)polysiloxans bzw. eines (Hydroxyalkyl)polysiloxanharzes oder ihrer Folgeprodukte gering gehalten werden sollen, so sind möglichst kleine Reste Rⁱⁱ ideal, insbesondere vorteilhaft ist die Wahl von Rⁱⁱ gleich CH₂. Ein weiterer Vorteil dieser Wahl für Rⁱⁱ ist, dass kleine Struktureinheiten geringere Reaktionsvolumina bei gleicher Stoffmenge an Rⁱⁱ-gebundenen OH-Gruppen und damit erhöhte Raumzeitausbeuten sowohl bei der Herstellung der (Hydroxyalkyl)polysiloxane bzw. der (Hydroxyalkyl)polysiloxanharze als auch ihrer Folgeprodukte mit sich bringen.

(Hydroxyalkyl)polysiloxane bzw. (Hydroxyalkyl)polysiloxanharze, bei denen Rⁱⁱ gleich CH₂ ist, werden im Folgenden (Hydroxymethyl)polysiloxane bzw. (Hydroxymethyl)polysiloxanharze genannt.

Verfahren zur Herstellung von (Hydroxyalkyl)polysiloxanen bzw. von (Hydroxyalkyl)polysiloxanharzen sind in der Literatur beschrieben.

So beschreiben die Stellen EP 629 648, EP 768 347, DE 101 09 842, DE 10 2004 029 259 und DE 10 2005 045 334 Verfahren, bei denen Polysiloxane bzw. Polysiloxanharze oder Füller, die Si-OH-Gruppen tragen, mit cyclischen oder linearen Verbindungen der Struktur *[SiRⁱ₂-Rⁱⁱ-O-]_{ϕ}* (* = Endgruppen oder Ringschluss; ϕ ≥ 1) umgesetzt werden. Keine dieser Stellen beschreibt ein Verfahren, bei dem Rⁱⁱ gleich CH₂ ist.

Verfahren zur Herstellung von (Hydroxymethyl)polysiloxanen bzw. von (Hydroxymethyl)polysiloxanharzen (Rⁱⁱ gleich CH₂) sind ebenfalls in der Literatur beschrieben.

So beschreiben die Stellen DE 1 213 406, DE 1 236 505, DE 1 251 320, DE 879 839 und DE 1 233 395 die Herstellung von (Hydroxymethyl)polysiloxanen bzw. von (Hydroxymethyl)polysiloxanharzen durch Umsetzung von (Halomethyl)polysiloxanen bzw. von (Halomethyl)polysiloxanharzen mit Metallhydroxiden (DE 1 213 406) oder mit (i) Metallcarboxylaten und (ii) Umesterung der so erhaltenen (Acyloxymethyl)polysiloxane bzw. (Acyloxymethyl)-polysiloxanharze mit Alkoholen (DE 879 839; vgl. Herstellung von (Acyloxymethyl)polysiloxanen bzw. von (Acyloxymethyl)polysiloxanharzen durch Umsetzung von (Halomethyl)polysiloxanen bzw. von (Halomethyl)polysiloxanharzen mit Ammoniumcarboxylaten: DE 1 199 772, US 2 833 802). Unter den beschriebenen Bedingungen treten jedoch in der Regel Gerüstumlagerungen des Siloxangerüsts ein.

DE 1 236 505 und DE 1 251 320 beschreiben die Herstellung von (Hydroxymethyl)polysiloxanen bzw. von (Hydroxymethyl)-polysiloxanharzen durch Umesterung von (Acyloxymethyl)polysiloxanen bzw. von (Acyloxymethyl)polysiloxanharzen mit Alkoholen unter Katalyse durch Arylsulfonsäuren. Dabei beschreibt DE 1 236 505 unter anderem ein Verfahren, bei dem lineares Poly(dimethylsiloxan) (α,ω-OH-terminiert) mit einem (Acyloxymethyl)dimethylethoxysilan umgesetzt wird, und die *Si-*(Acyloxymethyl)gruppen werden mit Methanol zu Si-(Hydroxymethyl)gruppen (Si-CH₂-OH) umgeestert (Reaktion "f)" in DE 1 236 505). Um die Si-(Acyloxymethyl)gruppen umzuestern müssen jedoch drastische Bedingungen (Toluolsulfonsäure und Erhitzen) angewendet werden. Unter solchen Bedingungen treten jedoch in der Regel Gerüstumlagerungen des Siloxangerüstes ein.

DE 1 233 395 beschreibt die Herstellung von (Hydroxymethyl)-polysiloxanen bzw. von (Hydroxymethyl)polysiloxanharzen durch Umsetzung von (Acyloxymethyl)polysiloxanen bzw. von (Acyloxymethyl)polysiloxanharzen mit Alkalimetallboranaten und Hydrolyse des so erhaltenen Primärprodukts. Alkalimetallboranate sind jedoch kostspielige Reagenzien und können auch das Siloxangerüst angreifen und verändern.

DE 1 227 456, DE 879 839 und SU 1 512 982 beschreiben die Herstellung von (Hydroxymethyl)polysiloxanen bzw. von (Hydroxymethyl)polysiloxanharzen durch Äquilibrierung von beispielsweise 1,3-Bis(hydroxymethyl)-1,1,3,3-tetramethyldisiloxan mit cyclischen oder acyclischen Organopolysiloxanen. Für eine solche Äquilibrierungsreaktion ist jedoch die Spaltung der Siloxanbildung des 1,3-Bis(hydroxymethyl)-1,1,3,3-tetramethyldisiloxans erforderlich. Die Bedingungen, unter denen diese Disiloxanbindung gespalten wird, bewirken jedoch auch die Umlagerung bzw. Spaltung von Siloxanbindungen in dem Organopolysiloxan, das umgesetzt werden soll.

Den beschriebenen Verfahren zur Herstellung von (Hydroxymethyl)polysiloxanen bzw. von (Hydroxymethyl)polysiloxanharzen ist gemein, dass unter den Reaktionsbedingungen leicht Gerüstumlagerungen des Siloxangerüsts eintreten, so dass die Verfahren nicht zu definierten Produkten führen. Ferner verläuft die Freisetzung der ≡SiCH₂OH-Gruppen aus den entsprechenden Vorläuferverbindungen (z.B. ≡SiCH₂-OAcyl oder ≡SiCH₂-Halogen) häufig nicht quantitativ und/oder die entstandenen ≡SiCH₂OH-Gruppen reagieren unter den Reaktionsbedingungen weiter (z.B. mit HCl zu ≡SiCH₂Cl-Gruppen, mit Schwefelsäure zu ≡SiCH₂OCH₂Si≡-Gruppen oder mit Hydroxiden unter Spaltung der Si-C-Bindung der SiCH₂OH-Gruppen zu Si-OH-Gruppen), so dass das Produkt nicht die theoretisch zu erwartende Anzahl bzw. Konzentration an ≡SiCH₂OH-Gruppen aufweist. Ferner führen Reagenzienreste und/oder Katalysatorreste im Produkt häufig zu Umlagerung, Spaltung, Kondensation oder Äquilibrierung des Siloxangerüsts, so dass sich die Produkteigenschaften von (Hydroxymethyl)polysiloxanen bzw. von (Hydroxymethyl)polysiloxanharzen, die nach den literaturbekannten Verfahren hergestellt wurden, häufig während der Lagerung verändern. All diese Erfindungenerschweren oder verhindern die weitere Umarbeitung der nach dem bisherigen Stand der Technik hergestellten (Hydroxymethyl)polysiloxane bzw. (Hydroxymethyl)polysiloxanharze zu definierten Folgeprodukten, dies gilt vor allem für Folgeumsetzungen an der SiCH₂OH-Gruppe.

Die Aufgabe der Erfindung ist daher, den Stand der Technik zu verbessern, ein Verfahren zur Herstellung von (Hydroxymethyl)-polysiloxanen bzw. von (Hydroxymethyl)polysiloxanharzen bereitzustellen, das zu definierten Produkten, bevorzugt in hoher Reinheit und bevorzugt mit hoher Produktstabilität, führt.

Gegenstand der Erfindung ist ein Verfahren zur Herstellung von (Hydroxymethyl)polysiloxanen bzw. von (Hydroxymethyl)polysiloxanharzen der allgemeinen Formel I

(SiO_{4/2})ₖ(RⁱSiO_{3/2})ₘ(R¹₂SiO_{2/2})ₚ(R¹₃SiO_{1/2})_{q} [O_{1/2}-(SiR²₂-X-Y-)ₐSiR²₂-CH₂-OH]ₛ[O_{1/2}H]ₜ Formel I,

bei dem Silanol-haltige Organosiloxane bzw. Organosiloxanharze der allgemeinen Formel II

(SiO_{4/2})ₖ(R¹SiO_{3/2})ₘ(R¹₂SiO_{2/2})ₚ(R¹₃SiO_{1/2})_{q}[O_{1/2}H]ᵣ Formel II

mit cyclischen oder acyclischen Verbindungen, die mindestens eine Einheit der allgemeinen Formel III

Z-[O-CH₂-SiR²₂]ₙ-Y Formel III

aufweisen, umgesetzt werden, wobei
- **R¹**: ein Wasserstoffatom oder einen gegebenenfalls mit **Q¹** substituierten, gegebenenfalls durch eine oder mehrere heteroatomhaltige Gruppen **Q²** unterbrochenen, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest,
- **R²**: einen gegebenenfalls mit **Q¹** substituierten, gegebenenfalls durch ein oder mehrere heteroatomhaltige Gruppen **Q²** unterbrochenen oder ein oder mehrere heteroatomhaltige Gruppen **Q²** enthaltenden, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest oder Si₁-Si₂₀ Siloxanylrest,
- **Q¹**: einen heteroatomhaltigen einbindigen Rest,
- **Q²**: einen heteroatomhaltigen zweibindigen Rest oder einen heteroatomhaltigen dreibindigen Rest bedeutet,
- **Z**: für Wasserstoff, für eine Gruppe **X-SiR²₂-**, oder zusammen mit Y für ein Bindungselektronenpaar steht,
- **X**: für eine Gruppe R², für eine Siloxangruppe oder für ein Bindungselektronenpaar zu Y steht oder mit Y verbunden sein kann oder X zusammen mit Y ein Sauerstoffatom bedeutet oder ein an Y gebundenes Sauerstoffatom bedeutet,
- **Y**: Bedeutungen ausgewählt aus den Bedeutungen von **R²** oder **Q¹** oder **Q²** annehmen kann oder für einen Siloxanrest oder für eine hydrolysierbare Gruppe einschließlich Hydroxygruppe oder zusammen mit Z für ein Bindungselektronenpaar steht und mit Z via X verbunden sein kann und durch eine oder mehrere gegebenenfalls substituierte Siloxangruppen unterbrochen sein kann oder zusammen mit X ein Sauerstoffatom bedeutet, mit der Maßgabe, dass **Y,** wenn n = 1 ist, eine hydrolysierbare Gruppe oder einen Siloxanrest, der mindestens eine hydrolysierbare Gruppe beinhaltet, oder zusammen mit X ein Sauerstoffatom bedeutet oder mit X verbunden ist oder zusammen mit Z für eine Bindung steht,
- **s**: Werte von mindestens 1,
- **r**: Werte von mindestens 1,
- **n**: Werte von mindestens 1,
- **t**: Werte von mindestens 0,
- **n**: Werte von mindestens 1,
die Summe **s + t** den Wert von r,
- **k, m, p, q**: Werte größer oder gleich Null bedeuten, mit der Maßgabe, dass die Summe **k + m + p + q** eine Summe von mindestens 2 bedeutet,
- **a**: den Wert 0 oder 1 annimmt.

Die Definitionen, dass zwei Gruppen, wie beispielsweise X, Y bzw. Z, in den oben genannten Kombinationsmöglichkeiten zusammen eine Bindung oder zusammen ein Sauerstoffatom bedeuten, lassen sich am Beispiel der Verbindungen **1** und **2** erläutern:

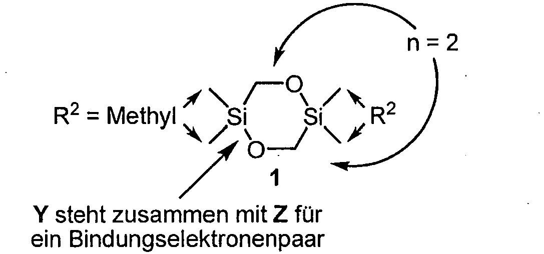

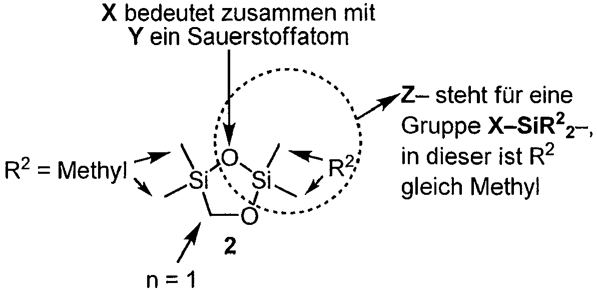

In Verbindung **1** sind alle Reste R² gleich Methyl, n ist gleich 2 und Y steht zusammen mit Z für ein Bindungselektronenpaar. In Verbindung **2** ist R² gleich Methyl, n ist gleich 1, Z steht für eine Gruppe **X-SiR²₂-** (wiederum mit R² gleich Methyl) und X bedeutet zusammen mit Y ein Sauerstoffatom.

Verbindungen, die mindestens eine Einheit der allgemeinen Formel III aufweisen, werden im Folgenden vereinfachend "Verbindungen der Formel III" genannt.

Die Verbindungen der Formel II und der Formel III oder Gemische enthaltend diese Verbindungen können bei dem erfindungsgemäßen Verfahren in jedweder Reihenfolge zubereitet, gemischt und zueinander dosiert werden, gegebenenfalls auch mehrfach wiederholend, gegebenenfalls auch abwechselnd. Bei dem erfindungsgemäßen Verfahren wird mindestens eine Verbindung der Formel II und mindestens eine Verbindung der Formel III eingesetzt; es können auch zwei, drei, vier, fünf, sechs oder mehrere Verbindungen der Formel II oder der Formel III eingesetzt werden, gleichzeitig oder nacheinander, gegebenenfalls auch mehrfach wiederholend, gegebenenfalls auch abwechselnd. Bei dem erfindungsgemäßen Verfahren wird mindestens ein (Hydroxymethyl)polysiloxan bzw. (Hydroxymethyl)polysiloxanharz der Formel I hergestellt; es können auch zwei, drei, vier, fünf, sechs oder mehrere Verbindungen der Formel I nebeneinander hergestellt werden. Die eingesetzten Verbindungen der Formel III können frei von Solvolysaten sein oder beispielsweise ihre Solvolysate, beispielsweise mit Alkoholen, Wasser oder Silanolen, aufweisen.

Verwendet man Verbindungen, die Einheiten der allgemeinen Formel III enthalten, zur Funktionalisierung von Si-OH-Gruppen in Organosiloxanen bzw. Organosiloxanharzen der allgemeinen Formel II, so reagieren diese überraschend leicht und gezielt mit guten Ausbeuten mit Silanolgruppen zu Carbinolen.

Verwendet man Verbindungen, die Einheiten der allgemeinen Formel III enthalten, zur Funktionalisierung von Si-OH-Gruppen in Organosiloxanen bzw. Organosiloxanharzen der allgemeinen Formel II, so werden die CH₂OH-Gruppen in den nach dem erfindungsgemäßen Verfahren erzeugten (Hydroxymethyl)siloxaneinheiten durch *Si*-O-Bindungsspaltung und *O*-Protonierung einer Gruppierung der Struktur Si(R²₂)CH₂O-Si generiert, oder die CH₂OH-Gruppen liegen, wenn Z in Formel III gleich Wasserstoff gewählt wird, schon als solche vor.

Damit unterscheidet sich das erfindungsgemäße Verfahren von den bisher bekannten Verfahren zur Herstellung von (Hydroxymethyl)-polysiloxanen und (Hydroxymethyl)polysiloxanharzen. Bei den bisher bekannten Verfahren zur Herstellung von (Hydroxymethyl)-polysiloxanen oder (Hydroxymethyl)polysiloxanharzen werden als Vorstufe Siloxane eingesetzt oder erzeugt, die eine Gruppierung der Struktur Siloxan-CH₂-A tragen. Die Gruppe A stellt dabei einen Acyloxyrest oder ein Halogenatom dar und wird unter harschen Bedingungen, beispielsweise mit Alkalimetallhydroxiden (A = Halogen) oder mit Alkoholen unter Säurekatalyse oder mit Borhydriden (A = Acyloxy) in OH-Gruppen umgearbeitet. Die harschen Reaktionsbedingungen führen häufig zu Umlagerungen des Siloxangerüsts oder zu ungewollten Folgereaktionen an den erzeugten (Hydroxymethyl)gruppen wie beispielsweise Spaltung von Si-C-Bindungen. Ferner sind Siloxane mit einer Gruppierung Siloxan-CH₂-A (A = Halogen oder Acyloxy) keine Standardprodukte, sondern müssen als Vorstufe gezielt erzeugt werden. Im Unterschied dazu gelingt nach dem erfindungsgemäßen Verfahren die Umarbeitung von SiOH-Gruppen in (Hydroxymethyl)-siloxaneinheiten überraschend leicht, so dass beispielsweise die zu funktionalisierenden SiOH-Gruppen, die in (Hydroxymethyl)siloxaneinheiten umgearbeitet werden sollen, selbst reaktiv genug sind, um die Generierung der CH₂OH-Gruppen wie beschrieben zu bewirken, wobei optional Promotoren oder Katalysatoren eingesetzt werden können. Zudem sind die im erfindungsgemäßen Verfahren eingesetzten Organopolysiloxane oder Organopolysiloxanharze der Formel II Standardprodukte der Siliconindustrie, sie brauchen somit nicht als Vorstufe für die Synthese von (Hydroxymethyl)polysiloxanen oder (Hydroxymethyl)-polysiloxanharzen gesondert hergestellt zu werden.

**R¹** und **R²** weisen vorzugsweise 1 bis 12 Kohlenstoffatome, insbesondere 1 bis 6 Kohlenstoffatome, vorzugsweise nur Kohlenstoffatome und Wasserstoffatome, oder ein Alkoxysauerstoffatom und sonst nur Kohlenstoffatome und Wasserstoffatome auf.

Vorzugsweise sind **R¹** und **R²** geradkettige oder verzweigte oder cyclische C₁-C₆ Kohlenwasserstoffreste. Für **R¹** bevorzugt sind die Reste Methyl, Ethyl, Phenyl, Allyl und Vinyl, besonders bevorzugt ist Methyl. Für **R²** bevorzugt sind die Reste Methyl, Ethyl, Phenyl, Allyl, Vinyl, Methoxy und Ethoxy, besonders bevorzugt sind Methyl, Ethyl, Phenyl, Allyl und Vinyl, insbesondere Methyl.

Bevorzugt werden die Verbindungen der allgemeinen Formel I hergestellt, bei denen **R¹** und **R²** Methylreste bedeuten.

**Q¹** steht bevorzugt für einen Fluor-, Chlor-, Brom-, Iod-, Cyanato-, Isocyanato-, Cyano-, Nitro-, Nitrato-, Nitrito-, Silyl-, Silylalkyl-, Silylaryl-, Siloxy-, Siloxanoxy-, Siloxyalkyl-, Siloxanoxyalkyl-, Siloxyaryl-, Siloxanoxyaryl-, Hydroxy-, Alkoxy-, Aryloxy-, Acyloxy-, *S*-Sulfonato-, *O-*Sulfonato, Sulfato-, *S*-Sulfinato-, *O*-Sulfinato-, Amino-, Alkylamino-, Arylamino-, Dialkylamino-, Diarylamino-, Arylalkylamino-, Acylamino-, Imido-, Sulfonamido-, Imino-, Mercapto-, Alkylthio- oder Arylthiosubstituenten, *O*-Alkyl-N-Carbamato, *O*-Aryl-N-Carbamato, *N*-Alkyl-O-Carbamato, *N*-Aryl-O-Carbamato, gegebenenfalls alkyl- oder arylsubstituierten *P-*Phosphonato-, gegebenenfalls alkyl- oder arylsubstituierten *O-*Phosphonato-, gegebenenfalls alkyl- oder arylsubstituierten *P-*Phosphinato-, gegebenenfalls alkyl- oder arylsubstituierten *O-*Phosphinato-, gegebenenfalls alkyl- oder arylsubstituierten Phosphino-, Hydroxycarbonyl-, Alkoxycarbonyl-, Aryloxycarbonyl-, cyclischen oder acyclischen Carbonat-, Alkylcarbonato- oder Arylcarbonatosubstituenten, besonders bevorzugt für einen Fluor-, Chlor-, Brom-, Iod-, Cyanato-, Isocyanato-, Cyano-, Silyl-, Silylalkyl-, Silylaryl-, Siloxy-, Siloxanoxy-, Siloxyalkyl-, Siloxanoxyalkyl-, Siloxyaryl-, Siloxanoxyaryl-, Hydroxy-, Alkoxy-, Aryloxy-, Acyloxy-, S-Sulfonato-, Sulfato-, Amino-, Alkylamino-, Arylamino-, Dialkylamino-, Diarylamino-, Arylalkylamino-, Acylamino-, Imido-, Sulfonamido-, Imino-, Mercapto-, Alkylthio- oder Arylthiosubstituenten, *O*-Alkyl-*N-*Carbamato, *O*-Aryl-*N*-Carbamato, *N*-Alkyl-*O*-Carbamato, *N*-Aryl-*O-*Carbamato, gegebenenfalls alkyl- oder arylsubstituierten *P-*Phosphonato-, gegebenenfalls alkyl- oder arylsubstituierten *O-*Phosphonato-, gegebenenfalls alkyl- oder arylsubstituierten *P-*gegebenenfalls alkyl- oder arylsubstituierten Phosphino-, Hydroxycarbonyl-, Alkoxycarbonyl-, oder Aryloxycarbonylsubstituenten.

Q**²** steht bevorzugt für einen heteroatomhaltigen zweibindigen Rest, wie beispielsweise -O-, -S-, -N(R⁴)-, -C(O)-, Epoxy, - C(O)-O-, -O-C(O)-O-, -O-C(O)-N(R⁴)-, -N(R⁴)-C(O)-O-, -S(O)-, - S(O)₂-, -S(O)-O-, -S(O)₂-O-, -O-S(O)₂-O-, -C(O)-N(R⁴)-, -S(O)₂-N(R⁴)-, -S(O)₂-N[C(O)R⁶]-, -O-S(O)₂-N(R⁴)-, -N(R⁴)-S(O)₂-O-, - P(O) (OR⁵)-O-, -O-P(O) (OR⁵)-, -O-P(O)(OR⁵)-O-, -P(O) (OR⁵)-N(R⁴)-, -N(R⁴)-P(O) (OR⁵)-, -O-P(O) (OR⁵)-N(R⁴)-, -N(R⁴)-P(O) (OR⁵)-O-, - N[C(O)R⁶]-, -N=C(R⁶)-O-, -C(R⁶)=N-O-, -C(O)-N[C(O)R⁶]-, - N[S(O)₂R⁷]-, -C(O)-N[S(O)₂R⁷]-, -N[P(O)R⁸₂]-, -Si(R²₂) -, - [Si(R²₂)O]ₒ-, -[OSi(R²₂)]ₒ-, -[OSi(R²₂)]ₒO-, besonders bevorzugt für -O-, -S-, -N(R⁴)-, -C(O)-, Epoxy, -C(O)-O-, -O-C(O)-N(R⁴)-, -N(R⁴)-C(O)-O-, -S(O)-, -S(O)₂-, -S(O)₂-O-, -O-S(O)₂-O-, -C(O)-N(R⁴)-, -S(O)₂-N(R⁴)-, -S(O)₂-N[C(O)R⁶]-, -O-S(O)₂-N(R⁴)-, -N(R⁴)-S(O)₂-O-, -P(O)(OR⁵)-O-, -O-P(O)(OR⁵)-, -O-P(O)(OR⁵)-O-, - N[C(O)R⁶]-, -N=C(R⁶)-O-, -C(R⁶)=N-O-, -C(O)-N[C(O)R⁶]-, - N[S(O)₂R⁷]-, -C(O)-N[S(O)₂R⁷]-, -N[P(O)R⁸₂]-, -Si(R²₂)-, - [Si(R²₂)O]ₒ-, -[OSi(R²₂)]ₒ-, -[OSi(R²₂)]ₒ-, wobei **R⁴, R⁵** und **R⁶** für Wasserstoff oder gegebenenfalls substituierte C₁-C₂₀-Alkyl-oder C₆-C₂₀-Arylreste stehen, **R⁷** für einen gegebenenfalls substituierten C₁-C₂₀-Alkyl- oder C₆-C₂₀-Arylrest steht, R⁸ für einen gegebenenfalls substituierten C₁-C₂₀-Alkyl, C₆-C₂₀-Aryl-, C₁-C₂₀-Alkoxy- oder C₆-C₂₀-Aryloxyrest steht und o für eine Zahl von 1 bis 100, bevorzugt 1 bis 10, steht, oder für einen heteroatomhaltigen dreibindigen Rest, wie beispielsweise -N= oder -P=.

Das hydroxyfunktionelle Organosiloxan der allgemeinen Formel II kann beispielsweise linear, cyclisch oder verzweigt sein. Die Summe von **k, m, p, q,** s und **t** ist vorzugsweise eine Zahl von 3 bis 10000, bevorzugt 4 bis 1000, besonders bevorzugt 5 bis 200. Die Summe von **k, m, p, q** und **r** ist vorzugsweise eine Zahl von 3 bis 10000, bevorzugt 4 bis 1000, besonders bevorzugt 5 bis 200. Die Summe von **k, m, p** und **q** ist vorzugsweise eine Zahl von 2 bis 10000, bevorzugt 3 bis 1000, besonders bevorzugt 4 bis 200.

Die benannten Summen beziehen sich auf die mittleren Kettenlängen (Zahlenmittel) der jeweiligen Siloxane. Vorzugsweise sind die Gruppen [O_{1/2}H] bzw. die Gruppen [O_{1/2}-(SiR²₂-X-Y-)ₐSiR²₂-CH₂-OH] an Gruppen (R¹₂SiO_{2/2}) gebunden.

**k** ist vorzugsweise eine Zahl von 0 bis 50, bevorzugt 0 bis 5, besonders bevorzugt 0 bis 1, insbesondere 0.

**m** ist vorzugsweise eine Zahl von 0 bis 100, bevorzugt 0 bis 10, besonders bevorzugt 0 bis 1, insbesondere 0.

**p** ist vorzugsweise eine Zahl von 0 bis 10000, bevorzugt 1 bis 1000, besonders bevorzugt 2 bis 200.

**q** ist vorzugsweise eine Zahl von 0 bis 100, bevorzugt 0 bis 10, besonders bevorzugt 0 bis 1, insbesondere 0.

**s** ist vorzugsweise eine Zahl von 1 bis 100, bevorzugt von 1 bis 10, besonders bevorzugt von 1 bis 2, insbesondere 2.

**r** ist vorzugsweise eine Zahl von 1 bis 100, bevorzugt von 1 bis 10, besonders bevorzugt von 1 bis 2, insbesondere 2.

**t** ist vorzugsweise eine Zahl von 0 bis 99, bevorzugt von 0 bis 9, besonders bevorzugt von 0 bis 1, insbesondere 0.

Die Variable **a** nimmt in Formel I vorzugsweise den Wert 0 an. Vorzugsweise sind die Gruppen [O_{1/2}H] an Gruppen (R¹₂SiO_{2/2}) gebunden. Vorzugsweise sind die Gruppen [O_{1/2}-(SiR²₂-X-Y-)ₐSiR²₂-CH₂-OH] an Gruppen (R¹₂SiO_{2/2}) gebunden.

Die Variable **n** nimmt in Formel III vorzugsweise Werte größer oder gleich 2 an, bevorzugt Werte von 2 bis 100, besonders bevorzugt von 2 bis 20. Die Variable **n** kann beispielsweise die Werte 1, 2, 3, 4, 5 oder 6-20 oder größer annehmen.

**Y** bedeutet vorzugsweise in Formel III zusammen mit **Z** eine Bindung oder **Z** bedeutet eine Gruppe **X-SiR²₂-,** in der **X** zusammen mit **Z** ein Sauerstoffatom oder eine Siloxangruppe, die mit **Z** verbunden ist, bedeutet; besonders bevorzugt bedeutet **Y** zusammen mit **Z** eine Bindung. In dem letzteren besonders bevorzugten Fall ergeben sich cyclische Verbindungen der Formel III, die ausschließlich aus Einheiten [O-CH₂-SiR²₂]ₙ bestehen.

Eine bevorzugte Variante für ein Organosiloxan der allgemeinen Formel II ist ein lineares Siliconpolymer mit **k** und **m** gleich 0, **p** größer oder gleich 1, **q** gleich 0 oder 1 und **r** gleich 1 oder 2, wobei die Bedingung **r + q** gleich 2 gilt, besonders bevorzugt mit **q** gleich 0, **p** größer oder gleich 2 und **r** gleich 2. Vorzugsweise ist **p** dabei gleich 3 bis 10000, bevorzugt 4 bis 1000, besonders bevorzugt 5 bis 200. Die benannten Werte für **p** beziehen sich auf die mittleren Kettenlängen (Zahlenmittel) der Siloxane. Vorzugsweise ist **r** gleich **s**. Dabei können die bevorzugten Organosiloxane der allgemeinen Formel II entweder monomodal oder bimodal oder multimodal verteilt sein, gleichzeitig können sie in einer engen oder sehr breiten Molmassenverteilung vorliegen.

Eine weitere bevorzugte Variante für ein eingesetztes verzweigtes Organosiloxan der allgemeinen Formel II ist ein Organosilicon-Harz. Dieses kann aus mehreren Einheiten bestehen, wie die allgemeine Formel II zeigt, wobei die Molprozente der enthaltenen Einheiten durch die Indizes **k, m, p**, **q**, **r**, **s** und **t** bezeichnet werden. Bevorzugt ist ein Wert von 0,1 bis 20 Mol-% an Einheiten **r,** bezogen auf die Summe von **k, m, p**, **q und r.** Gleichzeitig muß aber auch **k** + **m** > 0 sein. Bei der Herstellung des Organosiloxanharzes der allgemeinen Formel I muß s > 0 sein und **s + t** gleich **r** sein.

Bevorzugt werden hierbei Harze hergestellt, bei denen 5 Mol-% < **k + m** < 90 Mol-%, bezogen auf die Summe von **k, m, p**, **q, s** und **t** ist und vorzugsweise **t** gleich 0 ist. In einem besonders bevorzugten Fall sind die Reste **R¹** und **R²** Methylreste.

Die Einheiten (SiO_{4/2}), (R¹SiO_{3/2}), (R¹₂SiO_{2/2}), in Formel I bzw. die Einheiten (SiO_{4/2}), (R¹SiO_{3/2}), (R¹₂SiO_{2/2}) in Formel II können auch beispielsweise mehrfach wiederholt, beispielsweise als Blöcke oder als einzelne oder als alternierende Einheiten, auftreten.

Die Einheiten (R¹₃SiO_{1/2}), [O_{1/2}- (SiR²₂-X-Y-)ₐSiR²₂-CH₂-OH], [O_{1/2}H] in Formel I bzw. die Einheiten (R¹₃SiO_{1/2}), [O_{1/2}H] in Formel II können beispielsweise an mehreren Stellen des Polymerrückgrats, beispielsweise geordnet oder statistisch verteilt, auftreten.

Ein bevorzugtes Verfahren zur Herstellung von (Hydroxymethyl)polysiloxanen bzw. von (Hydroxymethyl)polysiloxanharzen ist dadurch gekennzeichnet, dass als Silanol-haltige Organosiloxane bzw. Organosiloxanharze der Formel II Verbindungen nach folgender Formel IIa

H[OSiR¹¹₂]_{α}OH Formel IIa,

sind,
wobei α ganzzahlige Werte von 2 bis 20000 und
**R¹¹** Methyl, Ethyl, Vinyl, Allyl oder Phenyl bedeutet,
verwendet werden.
α nimmt dabei vorzugsweise Werte von 3 bis 10000, bevorzugt 4 bis 1000, besonders bevorzugt 5 bis 200, an.

Die benannten Werte für α beziehen sich auf die mittleren Kettenlängen (Zahlenmittel) der Siloxane.

**R¹¹** bedeutet vorzugsweise Methyl, Ethyl, Vinyl oder Phenyl, bevorzugt Methyl oder Vinyl, besonders bevorzugt Methyl.

Die Formel IIa geht aus der Formel II hervor, wenn in Formel II die Reste R¹ die Bedeutung R¹¹ und k, m und q alle den Wert 0 annehmen und r den Wert 2 und p den Wert α, annimmt, wobei α die Werte annehmen kann wie oben definiert.

Ein bevorzugtes Verfahren zur Herstellung von (Hydroxymethyl)-polysiloxanen bzw. von (Hydroxymethyl)polysiloxanharzen ist dadurch gekennzeichnet, dass als Verbindungen der Formel III Verbindungen nach folgender Formel IIIa eingesetzt werden,

Z-[O-CH₂-SiR¹²₂)ₙ-Y Formel IIIa,

wobei **R¹²** die Bedeutungen Methyl, Ethyl, Vinyl, Allyl, Phenyl, Methoxy, Ethoxy, *n*-Propoxy, *iso-*Propoxy, *n*-Butoxy, *iso*-Butoxy, *sec*-Butoxy, *tert*-Butoxy, *n*-Pentoxy, *tert*-Pentoxy oder *n*-Hexoxy annehmen kann,
und **n, Y** und **Z** dieselben Bedeutungen annehmen können wie oben definiert.
**R¹²** bedeutet vorzugsweise Methyl, Ethyl, Vinyl, Allyl, Phenyl, Methoxy oder Ethoxy, bevorzugt Methyl, Ethyl, Vinyl, Allyl oder Phenyl, besonders bevorzugt Methyl.
**n**, **Y** und **Z** nehmen in Formel IIIa vorzugsweise, bevorzugt beziehungsweise besonders bevorzugt die oben bei Formel III als bevorzugt beziehungsweise besonders bevorzugt definierten Bedeutungen an.

Die Formel IIIa geht aus der Formel III hervor, wenn in Formel III die Reste R² die Bedeutung R¹² annehmen, wobei n, Y und Z dieselben Werte annehmen können wie oben bei Formel III definiert.

Ein bevorzugtes Verfahren zur Herstellung von (Hydroxymethyl)-polysiloxanen bzw. von (Hydroxymethyl)polysiloxanharzen ist dadurch gekennzeichnet, dass als Produkt der Formel I folgende Verbindungen der Formel Ia

HOCH₂SiR¹²₂ [OSiR¹¹₂]αOSiR¹²₂CH₂OH Formel Ia,

wobei α ganzzahlige Werte von 2 bis 20000 bedeutet und R¹¹ und R¹² die oben definierten Bedeutungen haben, hergestellt werden, wobei Verbindungen der Formel IIa mit Verbindungen der Formel IIIa umgesetzt werden.

α nimmt dabei vorzugsweise Werte von 3 bis 10000, bevorzugt 4 bis 1000, besonders bevorzugt 5 bis 200, an.

Die benannten Werte für α beziehen sich auf die mittleren Kettenlängen (Zahlenmittel) der Siloxane.

Das Stoffmengenverhältnis von Verbindungen der Formel II, die aus den für Formeln IIa definierten Möglichkeiten ausgewählt wurden, zu Verbindungen der Formel III, die aus den für Formeln IIIa definierten Möglichkeiten ausgewählt wurden, wird dabei bevorzugt so gewählt, dass das Stoffmengenverhältnis der Silanolgruppen in Formel IIa zum Stoffmengenverhältnis der Einheiten [OCH₂SiR¹²₂] in Formel IIIa, bezogen auf die Anzahl ihres Auftretens n in Formel IIIa, vorzugsweise 0,8 bis 1,2, bevorzugt 0,9 bis 1,1, besonders bevorzugt 1,0 beträgt. "Bezogen auf die Anzahl ihres Auftretens n in Formel IIIa" bedeutet dabei, dass für beispielsweise n = 2 die Einheit [OCH₂SiR¹²₂]ₙ als zwei Einheiten [OCH₂SiR¹²₂] berechnet wird, für beispielsweise n = 3 als drei Einheiten [OCH₂SiR¹²₂] u.s.w.

Vorzugsweise werden als Verbindungen, die eine Einheit der allgemeinen Formel III aufweisen, Verbindungen der folgenden allgemeinen Formeln IV-VIII eingesetzt

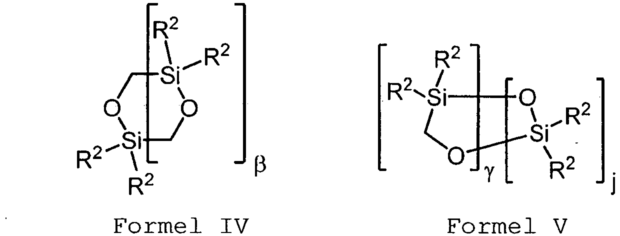

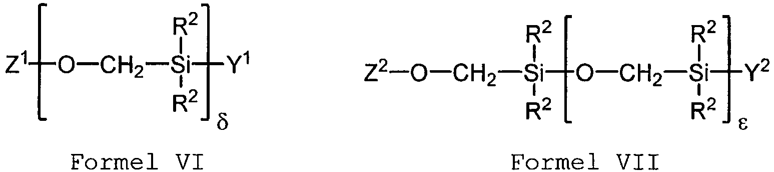

(SiO_{4/2})ₖ(R¹SiO_{3/2})ₘ(R¹₂SiO_{2/2})ₚ(R¹₃SiO_{1/2})_{q} [O_{1/2}-(SiR²₂-X-Y-)ₐ(SiR²₂-CH₂-O)ᵢZ³]ᵤ [O_{1/2}-(SiR²₂-X-Y-)ₐSiR²₂-CH₂-OZ³]ᵥ[O_{1/2}Z⁴]_{w} Formel VIII,

wobei
- **R¹**: in Formel VIII dieselben Bedeutungen annehmen kann wie oben definiert und in Formel VIII vorzugsweise, bevorzugt beziehungsweise besonders bevorzugt die Bedeutungen wie oben als vorzugsweise, bevorzugt beziehungsweise besonders bevorzugt für R¹ definiert annimmt,
- **R²**: in den Formeln IV-VIII dieselben Bedeutungen annehmen kann wie oben definiert und in den Formeln IV-VIII vorzugsweise, bevorzugt beziehungsweise besonders bevorzugt die Bedeutungen wie oben als vorzugsweise, bevorzugt beziehungsweise besonders bevorzugt für R² definiert annimmt, oder wobei R² in bevorzugten Ausführungsformen die Bedeutung R¹² annimmt, mit den für R¹² oben definierten Bedeutungen, vorzugsweise, bevorzugten und besonders bevorzugten Bedeutungen,
- **β, γ, δ, ε**: dieselben Bedeutungen wie n wie oben definiert annehmen können und vorzugsweise die Bedeutungen 1-100, bevorzugt 1-30 und besonders bevorzugt die Bedeutungen 1-10 annehmen,
- **i**: einen ganzzahligen Wert größer oder gleich 2 annehmen kann und vorzugsweise die Bedeutungen 2-100, bevorzugt 2-30 und besonders bevorzugt die Bedeutungen 2-10 annimmt,
- **j**: in Formel V einen ganzzahligen Wert größer oder gleich 0 bedeutet und vorzugsweise Werte größer oder gleich 1, bevorzugt Werte von 1-20 und besonders bevorzugt Werte von 1-10 annimmt,
- **k, m, p** und **q**: und ihre oben definierte **Summe** in Formel VIII dieselben Werte wie oben definiert annehmen können und vorzugsweise, bevorzugt bzw. besonders bevorzugt dieselben Werte wie oben als vorzugsweise, bevorzugt bzw. besonders bevorzugt für k, m, p bzw. q und für ihre Summe definiert annehmen,
- **u**: in Formel VIII einen Wert größer oder gleich 1 annehmen kann und vorzugsweise die Bedeutungen 1-20, bevorzugt 1-10, und besonders bevorzugt die Werte 1 oder 2 annimmt,
- **v**: in Formel VIII einen Wert größer oder gleich 0 annehmen kann und vorzugsweise die Bedeutungen 0-20, bevorzugt 0-10 und besonders bevorzugt die Werte 0, 1 oder 2 annimmt,
- **w**: in Formel VIII einen Wert größer oder gleich 0 annehmen kann und vorzugsweise die Bedeutungen 0-20, bevorzugt 0-10 und besonders bevorzugt den Wert 0, annimmt,
- **Y¹**: in Formel VI für einen Rest R², für einen Rest -O-(SiR²₂-CH₂-O)_{b}Z¹, für ein Wasserstoffatom oder für eine hydrolysierbare Gruppe, bevorzugt für eine Hydroxylgruppe, eine C₁-C₂₀ Alkoxygruppe, eine C₆-C₂₀ Aryloxygruppe oder für eine C₁-C₄₀ Polyethergruppe, insbesondere für eine Hydroxygruppe, eine Methoxygruppe oder eine Ethoxygruppe steht,
mit der Maßgabe, dass **Y¹,** wenn δ in Formel VI die Bedeutung 1 annimmt, für eine hydrolysierbare Gruppe, einschließlich Alkoxy-, Aryloxy-, Hydroxygruppe oder ein Wasserstoffatom, oder für für einen Rest -O-(SiR²₂-CH₂-O)_{b}H mit b größer oder gleich 2 steht,
- **b**: für Werte größer oder gleich 1 steht und vorzugsweise für Werte größer oder gleich 2, bevorzugt 2-30, besonders bevorzugt 2-10 steht
- **Y²**: in Formel VII für einen Rest R², für einen Rest -O-(SiR²₂-CH₂-O)_{c}Z², für ein Wasserstoffatom oder für eine hydrolysierbare Gruppe einschließlich Hydroxygruppe, bevorzugt für eine Hydroxygruppe, eine C₁-C₂₀ Alkoxygruppe, eine C₆-C₂₀ Aryloxygruppe oder für eine C₁-C₄₀ Polyethergruppe, insbesondere für eine Hydroxygruppe, eine Methoxygruppe oder eine Ethoxygruppe steht,
- **c**: für Werte größer oder gleich 1 steht und vorzugsweise für Werte größer oder gleich 2, bevorzugt 2-30, besonders bevorzugt 2-10 steht,
- **Z¹**: für ein Wasserstoffatom, für eine über ein Siliciumatom gebundene Silylgruppe oder für eine über ein Siliciumatom gebundene Siloxanylgruppe, bevorzugt für ein Wasserstoffatom, steht,
- **Z**²: für ein Wasserstoffatom, für eine über ein Siliciumatom gebundene Silylgruppe, für eine über ein Siliciumatom gebundene Siloxanylgruppe, oder - wenn ε in Formel VII einen Wert größer oder gleich 2 annimmt oder Y² eine hydrolysierbare Gruppe ist - für eine gegebenenfalls mit Q¹ substituierte oder durch eine oder mehrere Gruppen Q² unterbrochene Alkyl-, Aryl- oder Acylgruppe, bevorzugt für ein Wasserstoffatom, steht,
- **Z³**: für ein Wasserstoffatom, für eine über ein Siliciumatom gebundene Silylgruppe, für eine über ein Siliciumatom gebundene Siloxanylgruppe, oder - wenn i in Formel VIII einen Wert größer oder gleich 3 annimmt - für eine gegebenenfalls mit Q¹ substituierte oder durch eine oder mehrere Gruppen Q² unterbrochene Alkyl-, Aryl- oder Acylgruppe, bevorzugt für ein Wasserstoffatom, steht,
- **Z⁴**: dieselben Bedeutungen annehmen kann wie Z¹,
- **a**: dieselben Bedeutungen annehmen kann wie oben definiert und bevorzugt den Wert 0 annimmt.
**i** kann beispielsweise die Werte 2, 3, 4, 5, 6, 7, 8, 9, 10 oder größer annehmen.
**j, v, w** können beispielsweise die Werte 0, 1, 2, 3, 4, 5, 6, 7, 8, 9, 10 oder größer annehmen.
β, γ, δ, ε, **u** können beispielsweise die Werte 1, 2, 3, 4, 5, 6, 7, 8, 9, 10 oder größer annehmen.

Nimmt Z⁴ Bedeutungen ausgewählt aus Gruppen darstellbar durch R¹₃Si an, so ist [O_{1/2}Z⁴] auch darstellbar durch (R¹₃SiO_{1/2}), wobei q um 1 erhöht und w um 1 gesenkt wird.

**Die Einheiten [SiR²-CH₂-O-]_{γ} und [SiR²-O]ⱼ** in Formel V können auch beispielsweise mehrfach wiederholt, beispielsweise als Blöcke oder als einzelne oder als alternierende Einheiten, auftreten.

**Die Einheiten (SiO_{4/2}), (R¹SiO_{3/2}), (R¹₂SiO_{2/2}), (SiR²₂-X-Y-)**, **(SiR²₂-CH₂-O)** in Formel VIII können auch beispielsweise mehrfach wiederholt, beispielsweise als Blöcke oder als einzelne oder als alternierende Einheiten, auftreten. **Die Einheiten (R¹₃SiO_{1/2}), [O_{1/2}-(SiR²₂-X-Y-)ₐ(SiR²₂-CH₂-O)ᵢZ³], [O_{1/2}-(SiR²₂-X-Y-)ₐSiR²₂-CH₂-OZ³], [O_{1/2}Z⁴]** in Formel VIII können beispielsweise an mehreren Stellen des Polymerrückgrats, beispielsweise geordnet oder statistisch verteilt, auftreten.

Ein bevorzugtes Verfahren ist dadurch gekennzeichnet, dass mindestens eine der eingesetzten Verbindungen der Formel III ausgewählt wird aus Verbindungen nach folgender Formel IIIb 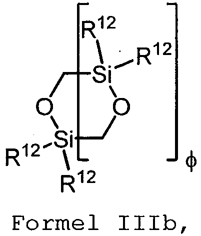 wobei R¹² dieselben Bedeutungen annehmen kann wie oben definiert und wobei R¹² in Formel IIIb vorzugsweise, bevorzugt bzw. besonders bevorzugt die Bedeutungen annimmt wie oben für R¹² als vorzugsweise, bevorzugt bzw. besonders bevorzugt definiert, und wobei φ ganzzahlige Werte größer oder gleich 1 annehmen kann und vorzugsweise Werte von 1 bis 10, bevorzugt die Werte 1 oder 2, besonders bevorzugt 1, annimmt.

Insbesondere bevorzugt werden als Verbindungen, die mindestens eine Einheit der allgemeinen Formel III aufweisen, die im Folgenden gezeigten Verbindungen Nummer **1** bis **4** eingesetzt, wobei die Verbindungen **4a** bis **4u** Vertreter der Struktur **4** darstellen, 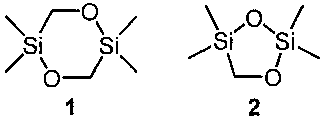 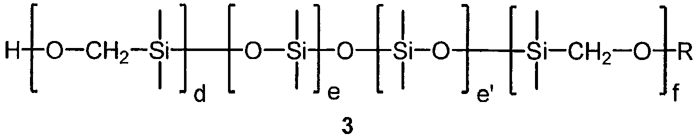 wobei d ganzzahlige Werte größer oder gleich 1, e ganzzahlige Werte größer oder gleich 0, e' ganzzahlige Werte größer oder gleich 0 und f ganzzahlige Werte von 0 oder größer oder gleich 2 annehmen kann, und wobei R die Bedeutungen Wasserstoff, Methyl, Ethyl, *n*-Propyl, *iso*-Propyl, *n*-Butyl, *sec*-Butyl, *iso-*Butyl, *tert*-Butyl, *n*-Pentyl, *sec*-Pentyl (1-Methylbutyl oder 1-Ethylpropyl), *iso*-Pentyl (2-Methylbutyl oder 3-Methylbutyl), *neo*-Pentyl, *tert*-Pentyl, *n-*Hexyl, *n*-Octyl, Benzyl, Phenyl, 2-Methylphenyl, 3-Methylphenyl, 4-Methylphenyl, Cyclopentyl oder Cyclohexyl annehmen kann, und wobei R, wenn f ungleich 0 ist, Wasserstoff bedeutet, und wobei d, wenn e gleich 0 und e' gleich 0 und f gleich 0 ist, ganzzahlige Werte größer oder gleich 2 annehmen kann, 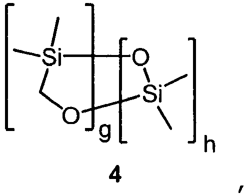 wobei g ganzzahlige Werte größer oder gleich 1 und h ganzzahlige Werte größer oder gleich 0 und die Summe aus g + h ganzzahlige Werte größer oder gleich 3 annehmen kann,

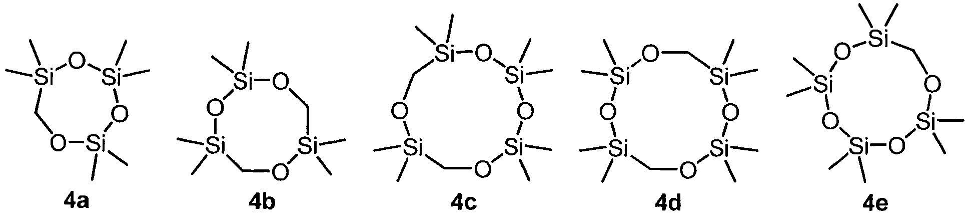

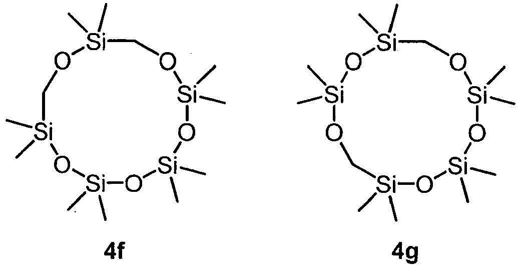

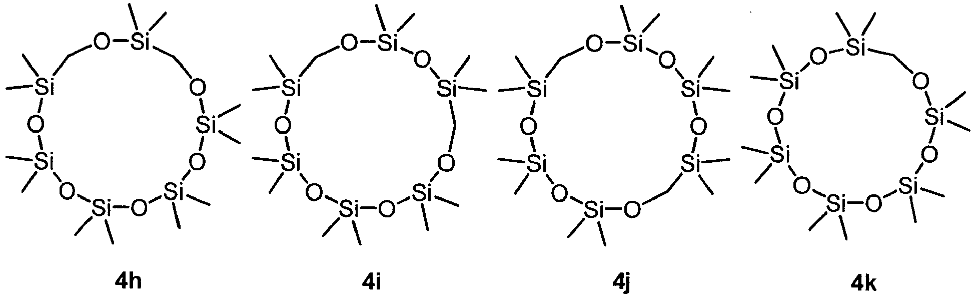

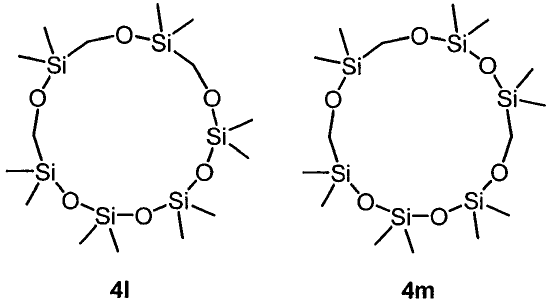

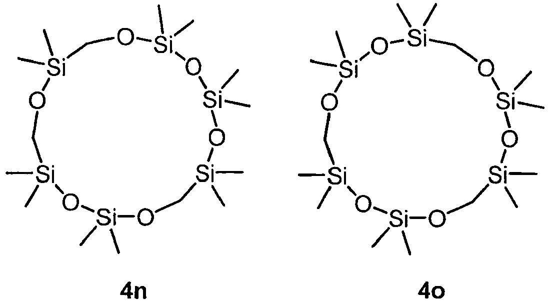

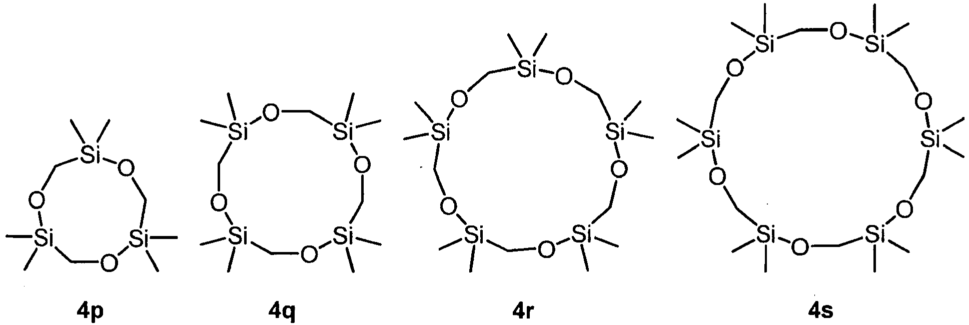

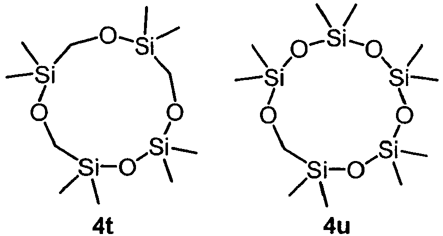

Gegenstand der Erfindung sind ferner die Verbindungen der Formel III mit den Strukturen **3** und **4**.

Die Wiederholungseinheiten [-O-CH₂-SiMe₂]_{d} und [-O-SiMe₂]ₑ beziehungsweise [SiMe₂-O-]_{e'} und [SiMe₂-CH₂-O-]_{f} in Struktur **3** können jeweils mehrfach wiederholt beispielsweise als Blöcke oder als einzelne oder als alternierende Einheiten, beispielsweise statistisch verteilt, auftreten.

Die Wiederholungseinheiten [SiMe₂-CH₂-O-]_{g} und [SiMe₂-O-]ₕ in Struktur **4** können mehrfach wiederholt beispielsweise als Blöcke oder als einzelne oder als alternierende Einheiten, beispielsweise statistisch verteilt, auftreten.

Ein Verfahren zur Herstellung von Verbindungen der Struktur **3,** dadurch gekennzeichnet, dass Verbindungen der Struktur **1, 2** oder **4** mit Wasser oder Alkoholen umgesetzt werden, ist ebenfalls Gegenstand der Erfindung. Die Verbindungen der Struktur **3** sind aus den Verbindungen der Struktur **1, 2** oder **4** durch Solvolyse mit Wasser oder Alkoholen, gegebenenfalls in Gegenwart mindestens eines Katalysators, herstellbar. Die Wahl des Restes R im gewählten Solvolysereagenz ROH determiniert dabei die Identität des Restes R im Produkt der Struktur **3.**

Ein Verfahren zur Herstellung von Verbindungen der Struktur **4,** dadurch gekennzeichnet, dass Verbindung **1** gelagert oder erhitzt wird, in Gegenwart einer Stoffmenge an [Me₂SiO]-Äquivalenten, die mindestens der Summe der Stoffmenge an [SiMe₂-O-]-Gruppen in den herzustellenden Verbindungen **4** entspricht. Die Verbindungen der Struktur **4** sind aus Verbindung **1** durch Erhitzen oder hinreichend lange Lagerung, gegebenenfalls in Gegenwart mindestens eines Katalysators, herstellbar, wobei das Verhältnis der Werte von h zu g in den so erhältlichen Produkten der Struktur **4** durch Zugabe von [Me₂SiO]-Äquivalenten, beispielsweise in Form von cyclischen Dimethylsiloxanen, wie Hexamethylcyclotrisiloxan, Octamethylcyclotetrasiloxan oder Decamethylcyclopentasiloxan, steuerbar ist. Je mehr [Me₂SiO]-Äquivalente zugegeben werden, desto größer wird das Verhältnis h:g. Minimum ist ein Verhältnis von h:g = 0, d.h. in diesem Fall wird die Summe der Stoffmenge an [SiMe₂-O-]-Gruppen in den herzustellenden Verbindungen der Struktur **4** gleich Null und dementsprechend müssen bei dem Verfahren in diesem Fall mindestens Null [Me₂SiO]-Äquivalente zugegeben werden. Die reine Verbindung 1 (> 98%, GC) ist bei Raumtemperatur ohne Katalysatorzusatz mehr als 6 Monate ohne merkliche Veränderung lagerfähig.

d nimmt vorzugsweise Werte von 2 bis 100, bevorzugt von 2 bis 30, insbesondere von 2 bis 10 an.

e nimmt vorzugsweise Werte von 0 bis 200, bevorzugt 0 bis 10, besonders bevorzugt 0 an.

e' nimmt vorzugsweise Werte von 0 bis 200, bevorzugt 0 bis 10, besonders bevorzugt 0 an.

f nimmt vorzugsweise die Werte 0 oder 2 bis 100, bevorzugt 0 oder 2 bis 30, besonders bevorzugt 0 an.

R ist vorzugsweise Wasserstoff, Methyl, Ethyl, *n*-Propyl, *iso*Propyl, *n*-Butyl, *sec*-Butyl, *iso*-Butyl, *tert*-Butyl, *n*-Pentyl, *n*Hexyl, *n*-Octyl, Benzyl, Phenyl, 2-Methylphenyl, 3-Methylphenyl, 4-Methylphenyl, Cyclopentyl oder Cyclohexyl, bevorzugt Wasserstoff, Methyl, Ethyl, *n*-Propyl, *n*-Butyl, *n*-Pentyl, *n-*Hexyl oder *n*-Octyl, besonders bevorzugt Wasserstoff, Methyl oder Ethyl.

g nimmt vorzugsweise Werte von 1 bis 10, bevorzugt 1 bis 5, besonders bevorzugt 1, 2 oder 3 an.

h nimmt vorzugsweise Werte von von 0 bis 10, bevorzugt 0 bis 5, besonders bevorzugt 0 an.

Die Summe g + h nimmt vorzugsweise Werte von 3 bis 20, bevorzugt 3 bis 10, besonders bevorzugt 3 bis 5 an.

Gegenstand der Erfindung ist ferner ein Verfahren zur Herstellung von Verbindungen der allgemeinen Formel VIII.

Die Verbindungen der Formel VIII sind erhältlich, indem man Gemische enthaltend Verbindungen der allgemeinen Formel II und/oder der allgemeinen Formel I bevorzugt mit einem Überschuss an Verbindungen der Formel IV, V, VI, VII oder einer zweiten Verbindung der Formel VIII umsetzt und die übrigen Verfahrensparameter wählt wie in dem Herstellungsverfahren für Verbindungen der Formel I beschrieben. Überschuss bedeutet, dass die Stoffmenge an insgesamt in den eingesetzten Verbindungen der Formel IV, V, VI, VII oder einer zweiten Verbindung der Formel VIII vorhandenen Struktureinheiten [OCH₂SiR²₂] einen Wert größer als die Stoffmenge an insgesamt in den eingesetzten Verbindungen der Formel I und II vorhandenen Struktureinheiten [O_{1/2}H] annimmt. In der Regel reagieren bei derart gewählten Stoffmengenverhältnissen die in Formel I bzw. II vorhandenen Struktureinheiten [O_{1/2}H] zu Struktureinheiten der Formel [O_{1/2}-(SiR²₂-X-Y-)ₐ(SiR²₂-CH₂-O)ᵢZ³] oder der Formel [O_{1/2}-(SiR²₂-X-Y-)ₐSiR²₂-CH₂-OZ³] ab, so dass w in dem resultierenden Produkt der Formel VIII in der Regel den Wert 0 annimmt; jedoch kann beispielsweise unter milden Bedingungen, wie beispielsweise ohne zugesetzten Katalysator oder beispielsweise mit einem wenig reaktiven Katalysator oder beispielsweise bei milden Temperaturen, wie beispielsweise unterhalb von 120 °C, die Herstellung von Verbindungen der Formel VIII so ausgeführt werden, dass w in dem resultierenden Produkt der Formel VIII einen Wert größer oder gleich 1 annimmt.

Bei Wahl stöchiometrischer Mengen an Verbindungen der Formel III können die in Formel I bzw. II vorhandenen Struktureinheiten 10_{1/2}H] zunächst zu Struktureinheiten der Formel [O_{1/2} - (SiR²₂-X-Y-)ₐ(SiR²₂-CH₂-O)ᵢZ³] abreagieren, so dass zunächst Verbindungen der Formel VIII gebildet werden, wobei w zunächst einen Wert größer als 0 annimmt. Stöchiometrisch bedeutet, dass die Stoffmenge an insgesamt in den eingesetzten Verbindungen der Formel IV, V, VI, VII oder einer zweiten Verbindung der Formel VIII vorhandenen Struktureinheiten [OCH₂SiR²₂] einen Wert gleich der Stoffmenge an insgesamt in den eingesetzten Verbindungen der Formel I und II vorhandenen Struktureinheiten [O_{1/2}H] annimmt. Die Struktureinheiten der Formel [O_{1/2}(SiR²₂-CH₂-O)ᵢZ³] können unter geeigneten Bedingungen mit noch im Reaktionsgemisch vorhandenen Struktureinheiten [O_{1/2}H] reagieren; läuft diese Reaktion vollständig ab, so erhält man Produkte der allgemeinen Formel I, wenn die verwendete Verbindung der Formel III ausgewählt wurde aus Verbindungen der Formeln VI mit Z¹ gleich Wasserstoff oder aus Verbindungen der Formel VII mit Z² gleich Wasserstoff oder wenn die verwendete Verbindung der Formel III ausgewählt wurde aus Verbindungen der Formeln IV oder V, und w nimmt in diesen Fällen den Wert 0, u den Wert 0 und v den Wert s an. In anderen Worten, Verbindungen der Formel VIII können als Zwischenstufen bei Anwendung des erfindungsgemäßen Verfahrens zur Herstellung von Verbindungen der Formel I aus Verbindungen der Formel II auftreten.

Wurde eine Verbindung der Formel VIII aus einer Verbindung der Formel II hergestellt, so nimmt die Summe **u + v + w** in der hergestellten Verbindung der Formel VIII den Wert von **r** in der eingesetzten Verbindung der Formel II an.

Verbindungen der Formel VIII können in andere Verbindungen der Formel VIII überführt werden. So können beispielsweise verschiedene Verbindungen der Formel VIII miteinander unter Austausch der Gruppen SiR²₂-CH₂-O miteinander äquilibriert werden, oder i oder v in Formel VIII können durch weitere Reaktion mit Verbindungen der Formel IV, V, VI oder VII erhöht oder durch Reaktion mit Verbindungen der Formel I oder der Formel II gesenkt werden. Wird bei Umsetzung einer Verbindung der Formel VIII mit einer Verbindung der Formel I oder II ein Überschuss an Verbindungen der Formel VIII eingesetzt, so können i oder v in der ursprünglich eingesetzten Verbindung der Formel VIII gesenkt werden, während die eingesetzte Verbindung der Formel I oder II ihrerseits in eine neue Verbindung der Formel VIII überführt werden kann.

Silylierte Verbindungen der Formel I und silylierte Derivate von Verbindungen der allgemeinen Formel I können hergestellt werden,
indem das Reaktionsgemisch, in dem die Verbindungen der Formeln II und III miteinander zur Reaktion gebracht werden,
oder indem die Verbindungen der Formeln II oder III,
vor, während oder nach der Reaktion der Verbindungen der Formeln II und III miteinander,
oder mindestens eine Verbindung der Formel I,
mit einem Silylierungsreagenz, wie beispielsweise ein Chlor-, Amino-, Alkoxy-, Hydroxy- -trialkyl-, -triaryl- oder - triarylalkylsilan, in Kontakt gebracht wird,
oder indem Z- in Formel III so ausgewählt wird, dass die Verbindung der Formel III ein Silylierungsreagenz in ihrer Struktur trägt, beispielsweise indem die Gruppe Z- in Formel III ausgewählt wird aus einer Trialkyl-, Triaryl- oder einer Triarylalkylsilylgruppe,
oder indem eine Kombination dieser Möglichkeiten gewählt wird, wobei Verbindungen der allgemeinen Formel IX erhalten werden,

(SiO_{4/2})ₖ(R¹SiO_{3/2})ₘ(R¹₂SiO_{2/2})ₚ(R¹₃SiO_{1/2})_{q}[O_{1/2}-(SiR²₂-X-Y-)ₐ(SiR²₂-CH₂-O)₁Z⁵]ₓ[O_{1/2}-(SiR²₂-X-Y-)ₐSiR²₂-CH₂-OZ⁵]_{y} LO_{1/2}Z⁶]_{z} Formel IX,

wobei
- **R¹** und **R²**: dieselben Bedeutungen annehmen können wie oben definiert
- **a**, **k**, **m**, **p** und **q**: dieselben Werte wie oben definiert annehmen können,
- **l**: einen ganzzahligen Wert größer oder gleich 2 annehmen kann und vorzugsweise die Bedeutungen 2-100, bevorzugt 2 bis 30, besonders bevorzugt 2-10 annimmt,
- **x**: einen Wert größer oder gleich 0 annehmen kann und vorzugsweise die Bedeutungen 0-20, bevorzugt 0-10, besonders bevorzugt 0, 1 oder 2 annimmt,
- **y**: einen Wert größer oder gleich 0 annehmen kann und vorzugsweise die Bedeutungen 0-20, bevorzugt 0-10, besonders bevorzugt 0, 1 oder 2 annimmt,
- **z**: einen Wert größer oder gleich 0 annehmen kann und vorzugsweise die Bedeutungen 0-10, bevorzugt 0, 1 oder 2, besonders bevorzugt 0, annimmt,
- **x + y + z**: den Wert von r annimmt,
- **Z⁵**: für eine über ein Siliciumatom gebundene Silylgruppe, für eine über ein Siliciumatom gebundene Siloxanylgruppe oder für ein Wasserstoffatom steht, und
- **Z⁶**: dieselben Bedeutungen annehmen kann wie Z⁵, mit der Maßgabe, dass die Gruppen Z⁵ oder Z⁶ zumindest teilweise aus Silylgruppen ausgewählt sein müssen.
- **Z⁵**: steht bevorzugt für eine über ein Siliciumatom gebundene Silylgruppe oder Wasserstoff, besonders bevorzugt für Wasserstoff.
- **Z⁶**: steht vorzugsweise für eine über ein Siliciumatom gebundene Silylgruppe oder für eine über ein Siliciumatom gebundene Siloxanylgruppe, bevorzugt für eine über ein Siliciumatom gebundene Silylgruppe, besonders bevorzugt für Trimethylsilyl, Triethylsilyl, Triisopropylsilyl, *tert-*Butyldimethylsilyl, Dimethylphenylsilyl oder Methyldiphenylsilyl.
**l** kann beispielsweise die Bedeutungen 2, 3, 4, 5, 6, 7, 8, 9, 10 oder 11-30 annehmen.
**x, y** und **z** können beispielsweise die Bedeutungen 0, 1, 2, 3, 4, 5, 6, 7, 8, 9, 10 oder 11-20 annehmen.

Vorzugsweise werden bei diesem Verfahren als Verbindungen der Formel II die Verbindungen der Formel IIa und als Verbindungen der Formel III die Verbindungen der Formel IIIa, IIIb, IV, V, VI, VII oder VIII, bevorzugt der Formel IIIb, besonders bevorzugt der Struktur **1**, eingesetzt.

Nimmt Z⁶ Bedeutungen ausgewählt aus Gruppen darstellbar durch R¹₃Si an, so ist die Gruppe [O_{1/2}Z⁶] auch darstellbar durch (R¹₃SiO_{1/2}), wobei q um 1 erhöht und z um 1 gesenkt wird. Wird gleichzeitig x gleich 0 und Z⁵ gleich Wasserstoff gewählt, so entspricht die Verbindung der Formel IX einer Verbindung der Formel I. Dies kann beispielsweise dadurch erzielt werden, dass das Silylierungsmittel die Struktur R¹₃Si-AG aufweist, wobei die Gruppe AG für eine hydrolysierbare Abgangsgruppe steht. Vorzugsweise wird die Verbindung der Formel II vor der Umsetzung mit Verbindung der Formel III mit dem Silylierungsmittel umgesetzt. Vorzugsweise wird die Summe aus Stoffmenge Silylierungsmittel plus Stoffmenge an Gruppen [OCH₂SiR²₂] in eingesetzter Verbindung der Formel III stöchiometrisch oder unterstöchiometrisch, bezogen auf die Stoffmenge an SiOH-Gruppen in eingesetzter Verbindung der Formel II, gewählt. Vorzugsweise steht AG für eine C₁-C₂₀ Alkoxygruppe, eine C₆-C₂₀ Aryloxygruppe, eine Hydroxygruppe, ein Halogenatom, einen über Stickstoff gebundenen Rest, ein Wasserstoffatom oder für eine Gruppe OSiR¹₃, bevorzugt für eine Methoxygruppe, eine Ethoxygruppe, eine Hydroxygruppe, ein Chloratom, ein Wasserstoffatom, eine Gruppe N(H)SiR¹₃, eine Gruppe N(Alkyl)SiR¹₃, eine Amino-, Alkylamino-, oder Dialkylaminogruppe, einen Imidazolrest oder für eine Gruppe OSiR¹₃.

Verbindungen der Formel IX, bei denen x größer 0 ist, können beispielsweise erhalten werden, indem ein Überschuss an Verbindungen der Formel III, bezogen auf das Stoffmengenverhältnis der Strukturelemente [OCH₂Si] in Verbindungen der Formel III zu Silanolgruppen in Verbindungen der Formel II, eingesetzt wird.

Verbindungen der Formel IX, bei denen x größer 0 ist, können im Laufe der Reaktion des Herstellungsverfahrens auch dann als Zwischenstufen auftreten, wenn kein Überschuss an Verbindungen der Formel III, bezogen auf das Stoffmengenverhältnis der Strukturelemente [OCH₂Si] in Verbindungen der Formel III zu Silanolgruppen in Verbindungen der Formel II, eingesetzt wird.

Setzt man Verbindungen der Formel I mit einem Silylierungsreagenz um, das die Struktur R¹₃Si-AG aufweist, so können Produkte erhalten werden, die ebenfalls der Formel I entsprechen, wobei t um die den silylierten Äquivalenten entsprechende Anzahl OH-Gruppen gesenkt und q um die den silylierten Äquivalenten entsprechende Anzahl OH-Gruppen erhöht wurde.

Will man beispielsweise Harze herstellen, welche nur einen definierten Gehalt an Hydroxylgruppen (Summe aus Carbinolgruppen **s** + Silanolgruppen **t**) haben, so wählt man die Verhältnisse zwischen Harz und Verbindung mit Einheiten der allgemeinen Formel III so, daß der gewünschte Carbinolgehalt erreicht wird. Restliche nicht umgesetzte Si-OH Gruppen können im organofunktionellen Siloxan der allgemeinen Formel I verbleiben oder werden, wenn ein reduzierter Gehalt an Silanolgruppen und damit an Hydroxylgruppen erwünscht ist, vor, während oder nach der Umsetzung mit mindestens einer Verbindung mit Einheiten der allgemeinen Formel III, mit beispielsweise Silazanen der nachstehenden allgemeinen Formel X 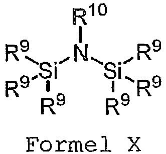 umgesetzt, in der
- **R⁹**: Wasserstoff oder einen gegebenenfalls mit -CN oder Halogen substituierten C₁-C₁₀-Kohlenwasserstoffrest und
- **R¹⁰**: Wasserstoff oder einen gegebenenfalls mit -CN oder Halogen substituierten C₁-C₁₀-Kohlenwasserstoffrest bedeuten.

Vorzugsweise weisen die Kohlenwasserstoffreste **R⁹** und **R¹⁰** 1 bis 5 Kohlenstoffatome auf. Insbesondere bevorzugt sind die Reste Methyl, Ethyl und Vinyl. Bevorzugt als **R¹⁰** ist Wasserstoff.

Werden als Verbindungen der Formel III Verbindungen der allgemeinen Formeln VI, VII oder VIII mit Verbindungen der Formel II umgesetzt, bei denen Z¹ in Formel VI bzw. Z² in Formel VII bzw. Z³ in Formel VIII ungleich Wasserstoff ist, so können Verbindungen der Formel VIII, bei denen Z³ oder Z⁴ zumindest teilweise ungleich Wasserstoff sind, erhalten werden. So kann Z³ beispielsweise für eine Silylgruppe, eine Siloxanylgruppe oder für eine gegebenenfalls mit Q¹ substituierte Alkyl-, Aryl- oder Acylgruppe stehen und Z⁴ kann für eine Silylgruppe oder eine Siloxanylgruppe stehen. Gruppen Z³, die durch Solvolyse mit protischen Verbindungen abspaltbar sind, können durch Solvolyse von Verbindungen der Formel VIII teilweise oder ganz in Wasserstoff überführt und i kann bis auf 1 reduziert werden. Bei vollständiger Solvolyse der Gruppen Z³ und Reduktion von i auf 1 werden Verbindungen der Formel I erhalten, wenn Z⁴ gleich Wasserstoff oder w gleich 0 gewählt wurde. Ebenso können die Gruppen Z⁵ in Verbindungen der Formel IX durch Solvolyse teilweise oder ganz in Wasserstoff überführt und h kann bis auf 1 reduziert werden. Bei vollständiger Solvolyse der Gruppen Z⁵ und Reduktion von h auf 1 werden Verbindung der Formel I erhalten, wenn Z⁶ gleich Wasserstoff oder z gleich 0 gewählt wurde.

Gegenstand der Erfindung ist ferner ein Verfahren zur Solvolyse von Verbindungen oder Zwischenstufen, die bei Zusatz eines Silylierungsmittels erhalten werden können, wie beispielsweise Solvolyse von Verbindungen der allgemeinen Formel VIII oder der Formel IX. Dieses Verfahren ist gekennzeichnet dadurch, dass die silylierten Zwischenstufen bzw. Verbindungen, wie beispielsweise die Verbindungen der allgemeinen Formel VIII oder IX, mit Wasser, einem Alkohol wie beispielsweise Methanol, Ethanol, Propanol oder Butanol, wobei *n*-, *sec-, iso-* oder *tert-*Isomere der Alkohole eingesetzt werden können, einem Silanol wie beispielsweise Triethylsilanol, einem OH-funktionellen Siloxan (wobei als OH-funktionelles Siloxan beispielsweise Verbindungen der Formel II eingesetzt werden können) oder, wenn Z³ in Formel VIII für eine Acylgruppe steht, auch mit einem primären oder sekundären Amin wie beispielsweise Ammoniak, Butylamin oder Diethylamin, oder mit einem Gemisch enthaltend eines oder mehrere dieser Solvolysereagenzien umgesetzt werden. Bevorzugt werden bei dem Solvolyseverfahren für Verbindungen der Formel VIII oder IX Wasser oder ein Alkohol eingesetzt. Bevorzugt werden bei dem Solvolyseverfahren für Verbindungen der Formel VIII die Parameter Z⁴ gleich Wasserstoff oder w gleich 0 gewählt und die Solvolyse der Gruppen Z⁴ wird vollständig durchgeführt und i wird durch Solvolyse auf 1 reduziert, so dass Verbindungen der allgemeinen Formel I erhalten werden.

Bevorzugt werden bei dem Solvolyseverfahren für Verbindungen der Formel IX die Parameter Z⁶ gleich Wasserstoff oder z gleich 0 gewählt und die Solvolyse der Gruppen Z⁴ wird vollständig durchgeführt und 1 wird durch Solvolyse auf 1 reduziert, so dass Verbindungen der allgemeinen Formel I erhalten werden.

Die vorgenannten Verfahren können vorzugsweise bei Temperaturen von 0°C bis 250 °C durchgeführt werden. Bevorzugt werden jedoch Reaktionstemperaturen von mindestens 10 °C bis 150 °C verwendet, insbesondere von 15 °C bis 120 °C. Die Verfahren können unkatalysiert ausgeführt werden. Die Verfahren können verbessert werden, indem man Katalysatoren zusetzt. Diese Katalysatoren sind saure oder basische Verbindungen oder Metallverbindungen und führen dazu, daß sowohl Reaktionszeiten als auch Reaktionstemperaturen verringert werden können.

Der verwendete Katalysator ist dabei vorzugsweise eine anorganische oder organische Lewis-Säure oder Lewis-Base, oder anorganische oder organische Brønstedt-Säure oder Brønstedt-Base, eine Organometallverbindung oder ein Halogenid-Salz.

Als bevorzugte Säuren werden Carbonsäuren, teilveresterte Carbonsäuren, insbesondere Monocarbonsäuren, vorzugsweise Ameisensäure oder Essigsäure, unveresterte oder teilveresterte mono-, oligo- oder Polyphosphorsäuren, unhydrolysiertes oder teilhydrolysiertes Phosphornitrilchlorid, Sulfonsäuren, Alkylhydrogensulfate oder saure Ionenaustauscher verwendet. Als bevorzugte Basen kommen vorzugsweise Alkylammoniumhydroxide, Ammoniumalkoxide, Alkylammoniumfluoride oder Aminbasen, Guanidinbasen oder Amidinbasen zum Einsatz. Bevorzugte Metallverbindungen sind Zinnverbindungen, Zinkverbindungen, Aluminiumverbindungen, Bismutverbindungen oder Titanverbindungen. Bevorzugte Organometallverbindungen sind Organo-Zinnverbindungen, Organo-Zinkverbindungen, Organo-Aluminiumverbindungen, Organo-Bismutverbindungen oder Organo-Titanverbindungen. Bevorzugte Salze sind Tetraalkylammoniumfluoride.

Die verwendeten Katalysatoren werden nach der Funktionalisierungsreaktion der Silanol-Gruppen vorzugsweise durch Zugabe von sogenannten Anti-Katalysatoren oder Katalysator-Giften deaktiviert, durch Destillation, Dekantieren, Zentrifugieren oder Filtration entfernt, an ein Trägermaterial adsorbiert, gefällt, komplexiert oder extrahiert, bevor sie zu einer Spaltung der Si-O-Si-Gruppen führen können. Diese Nebenreaktion ist abhängig vom verwendeten Katalysator und muss nicht notwendigerweise eintreten, so dass gegebenenfalls auf eine Deaktivierung oder auf Entfernen des Katalysators auch verzichtet werden kann. Beispiele für Katalysator-Gifte sind bei der Verwendung von Basen z.B. Säuren und bei der Verwendung von Säuren z.B. Basen, was im Endeffekt zu einer einfachen Neutralisationsreaktion führt. Das entsprechende Reaktionsprodukt zwischen Katalysator und Katalysator-Gift kann je nach Verwendung des Produktes entweder aus dem Produkt entfernt werden oder im Produkt verbleiben. Beispiele für Katalysatoren, die durch Destillation entfernt werden können, sind Carbonsäuren, wie beispielsweise Ameisensäure oder Essigsäure, oder Aminbasen, Amidinbasen oder Guanidinbasen, wie beispielsweise Triethylamin, Tributylamin, Ethyldiisopropylamin, Ethylendiamin, Tetramethylguanidin, 1,8-Diazabicyclo[5.4.0]undec-7-en, 1,5-Diazabicyclo[4.3.0]non-5-en oder 1,4-Diazabicyclo[2.2.2]octan. Beispiele für Katalysatoren, die durch Dekantieren, Filtration oder durch Zentrifugieren entfernt werden können, sind heterogene Katalysatoren wie beispielsweise polymergeträgerte Säuren oder Basen, saure oder basische Ionenaustauscher, oder saures oder basisches Aluminiumoxid. Beispiele für Katalysatoren, die adsorbiert, komplexiert oder gefällt werden können, sind Zinnverbindungen, Zinkverbindungen oder Titanverbindungen. Bevorzugt werden Katalysatoren eingesetzt, die durch Destillation aus dem Produkt entfernt werden können, besonders bevorzugt destillativ entfernbare Stickstoffbasen. Die destillativ entfernbaren Katalysatoren sind dadurch gekennzeichnet sind, dass sie, gemessen am Katalysator als Reinsubstanz, bei Temperaturen bis höchstens 300 °C, vorzugsweise höchstens 250 °C, bevorzugt höchstens 210 °C, besonders bevorzugt höchstens 180 °C einen Dampfdruck von mindestens 1 hPa, vorzugsweise mindestens 10 hPa, bevorzugt mindestens 100 hPa, besonders bevorzugt mindestens 1000 hPa aufweisen.

Bei dem Verfahren zur Herstellung von Hydroxyalkylpolysiloxanen der allgemeinen Formel I ist die Menge der eingesetzten Verbindung mit Einheiten der allgemeinen Formel III abhängig von der Menge **r** der zu funktionalisierenden Silanol-Gruppen im Organosiloxan der allgemeinen Formel II. Will man jedoch eine vollständige Funktionalisierung der OH-Gruppen erreichen, so ist die Verbindung mit Einheiten der allgemeinen Formel III in mindestens äquimolaren Mengen, bezogen auf **n,** zuzugeben. Verwendet man Verbindung mit Einheiten der allgemeinen Formel III im Überschuss, so kann abreagierte Verbindung im Anschluss, gegebenenfalls nach thermolytischer Spaltung, abdestilliert werden oder solvolysiert werden, bevorzugt hydrolysiert werden und dann gegebenenfalls ebenfalls abdestilliert werden, oder nicht abreagierte überschüssige Verbindung der Formel III kann beispielsweise mit den benannten Methoden entfernt werden. Als Zwischenstufe können beispielsweise Verbindungen der Formel VIII auftreten, von der überschüssige abreagierte Äquivalente an Verbindungen der Formel III durch Thermolyse oder Solvolyse abgespalten werden können, so dass Verbindung der Formel I erhalten werden kann.

Ferner können die im erfindungsgemäßen Verfahren eingesetzten Organopolysiloxane der Formel II Wasser enthalten, welches mit den Verbindungen der Formel III oder mit den während der Ausführung des Verfahrens gegebenenfalls als Zwischenstufen auftretenden Verbindungen der Formel VIII in Hydrolysereaktionen reagieren kann. Folge ist ein entsprechender Mehrverbrauch an Verbindung der Formel III. Diesem kann Rechnung getragen werden, indem entsprechend größere Mengen an Verbindung der allgemeinen Formel III eingesetzt werden, wobei bevorzugt je Mol Wasser zwei Mol Einheiten der Formel III, bezogen auf **n,** zusätzlich zugegeben werden. Methoden zur Wasserbestimmung wie beispielsweise Karl-Fischer-Titration oder Headspace-GC sind allgemein bekannt. Als Hydrolyseprodukte können beispielsweise Verbindungen der Struktur **3** oder 1,3-Bis(hydroxymethyl)-1,1,3,3-tetramethyldisiloxan oder (Hydroxymethyl)dimethyl-silanol auftreten. Die Verbindungen der Struktur **3** sind den Verbindungen der Formel III zuzuordnen und können somit - bereinigt um den beschriebenen wasserbedingten Mehrverbrauch - im erfindungsgemäßen Verfahren weiterreagieren Das 1,3-Bis-(hydroxymethyl)-1,2,3,3-tetramethyldisiloxan entspricht nicht einer Verbindung der Formel III, da n zu beiden Seiten des Siloxan-Sauerstoffatoms gleich 1 ist und keines der beiden Siliciumatome eine hydrolysierbare Gruppe trägt. Die Hydrolyseprodukte, wie beispielsweise 1,3-Bis(hydroxymethyl)-1,1,3,3-tetramethyldisiloxan, können nach der Durchführung des erfindungsgemäßen Verfahrens wahlweise im Produkt verbleiben oder durch beispielsweise destillative Verfahren oder Anlegen von Vakuum, vorzugsweise unter Erwärmen, entfernt werden. Alternativ kann das Wasser vor der Ausführung des erfindungsgemäßen Verfahrens aus dem einzusetzenden Organopolysiloxan der Formel II durch geeignete Methoden entfernt werden, wie beispielsweise durch Destillation, Anlegen von Vakuum, Erhitzen, Reaktion mit wasserabfangenden Reagenzien, Adsorption an wasseraufnehmende Mittel wie beispielsweise Molekularsiebe oder Aluminiumoxid, Trocknung durch Salze wie beispielsweise Magnesiumsulfat, Natriumsulfat, Calciumchlorid oder Kaliumcarbonat, oder durch Kombination von Trocknungsmethoden, wie beispielweise durch Kombination der genannten Methoden, beispielsweise Kombination von Erhitzen und Anlegen von Vakuum, wie es beispielsweise an einem Dünnschicht- oder Kurzwegverdampfer möglich ist. Das Entfernen des Wassers vor der Durchführung des erfindungsgemäßen Verfahrens ist bevorzugt. Die Trocknung wird dabei vorzugsweise ausgeführt, bis ein Restwassergehalt von weniger als 10000 ppm, bevorzugt weniger als 1000 ppm, besonders bevorzugt weniger als 200 ppm erreicht wird.

Die Verfahren können dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 MPa absolut) gearbeitet. Die Verfahren können kontinuierlich oder diskontinuierlich geführt werden.

Als Lösungsmittel können cyclische oder acyclische Kohlenwasserstoffe, Ether, Ester, Alkohole, Amide, Harnstoffderivate oder halogenierte organische Verbindungen oder Lösungsmittelgemische eingesetzt werden. Bei der Verwendung von Lösungsmitteln sind inerte, insbesondere aprotische Lösungsmittel wie aliphatische Kohlenwasserstoffe, wie z.B. Heptan oder Decan und aromatische Kohlenwasserstoffe wie z.B. Toluol oder Xylol bevorzugt. Ebenfalls können Ether wie Tetrahydrofuran, Diethylether oder Methyl-tert-butylether verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa absolut sind bevorzugt.

Werden Alkohole als Lösungsmittel eingesetzt, so können diese verschiedene Verbindungen der Formel III ineinander überführen.

So können beispielsweise Methanol oder Ethanol mit beispielsweise den Verbindungen der Strukturen **1, 2** oder **4** zu Verbindungen der Struktur **3** reagieren. Ebenso können alkoholische Lösungsmittel die Gruppen Z in Verbindungen der Formel III an den Si-OCH₂-Bindungen spalten, wenn Z aus Gruppen der Formel XR²₂Si ausgewählt wurde, wodurch Z in Wasserstoff überführt und gegebenenfalls n verringert wird, gegebenenfalls bis auf n = 1. Die durch Einwirkungen von Alkoholen erhaltenen Verbindungen der Formel III können im erfindungsgemäßen Verfahren ebenfalls eingesetzt werden.

Die nach einem der vorgenannten Verfahren hergestellten (Hydroxymethyl)polysiloxane oder (Hydroxymethyl)polysiloxanharze können verwendet werden zur Umsetzung mit Isocyanaten, zur Herstellung von Urethanen, Polyurethanen oder Polyurethancopolymeren, zur Umsetzung mit Carbonsäuren oder mit Carbonsäurederivaten, oder zur Herstellung von Estern, Polyestern oder Polyester-Copolymeren.

Alle vorstehenden Symbole der vorstehenden Formeln weisen ihre Bedeutungen, soweit nicht ausdrücklich anders angegeben, jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Alle Viskositäten wurden bei 25°C bestimmt.

### Beispiel 1

### Herstellung einer Verbindung der allgemeinen Formel I

1000 g Me-Siloxan (α,ω-Bishydroxy-terminiertes Polydimethylsiloxan mit einem Mn von 2930 g/mol, bestimmt durch ¹H-NMR-Spektroskopie; entsprechend 341,3 mmol Polydimethylsiloxan mit 682,6 mmol SiOH-Gruppen) wurden bei 20 °C mit 60,2 g (341,3 mmol) 2,2,5,5-Tetramethyl-2,5-disila-1,4-dioxacyclohexan (Verbindung **1**) und 0,5 g Tetramethylguanidin (Katalysator) (500 ppm bezogen auf Me-Siloxan) umgesetzt. ¹H-NMR und ²⁹Si-NMR zeigten, dass nach 2 Stunden alle SiOH-Gruppen zu Si-O-SiMe₂-CH₂OH-Einheiten (Hydroxymethyleinheiten) umgesetzt waren. Zur Entfernung des Katalysators wurde das Rohprodukt durch Dünnschicht-Destillation (130°C, 10 mbar, 400 g/h) gereinigt. Der Katalysator ging im Destillat über, zurück blieb reines α,ω-Bis(hydroxymethyl)polydimethylsiloxan.

### Beispiel 2

### Herstellung einer Verbindung der allgemeinen Formel I

Die Umsetzung erfolgt wie in Beispiel 1, mit dem Unterschied, dass 0,36 g Tetramethylguanidin (Katalysator) (360 ppm bezogen auf Me-Siloxan) zugegeben werden. Die Reaktion verläuft entsprechend langsamer und erreicht erst nach 6 Stunden den vollständigen Umsatz der SiOH-Gruppen. Die Reinigung erfolgt wie in Beispiel 1.

### Beispiel 3

### Herstellung einer Verbindung der allgemeinen Formel I

Die Umsetzung erfolgt wie in Beispiel 1, mit dem Unterschied, dass 0,25 g Tetramethylguanidin (Katalysator) (250 ppm bezogen auf Me-Siloxan) zugegeben werden. Die Reaktion verläuft entsprechend langsamer und erreicht erst nach 12 Stunden den vollständigen Umsatz der SiOH-Gruppen. Die Reinigung erfolgt wie in Beispiel 1.

### Beispiel 4

### Herstellung einer Verbindung der allgemeinen Formel I

1000 g Siloxan (α,ω-Bishydroxy-terminiertes Polydimethylsiloxan mit einem Mn von 900 g/mol, bestimmt durch ¹H-NMR-Spektroskopie; entsprechend 1,111 mol Siloxan mit 2,222 mol SiOH-Gruppen) wurden bei 20 °C mit 196 g (1,111 mol) 2,2,5,5-Tetramethyl-2,5-disila-1,4-dioxacyclohexan (Verbindung **1**) und 0,5 g Tetramethylguanidin (Katalysator) (500 ppm bezogen auf Siloxan) umgesetzt. ¹H-NMR und ²¹Si-NMR zeigten, dass nach 2 Stunden alle SiOH-Gruppen zu Si-O-SiMe₂-CH₂OH-Einheiten (Hydroxymethyleinheiten) umgesetzt waren. Zur Entfernung des Katalysators wurde das Rohprodukt durch Dünnschicht-Destillation (130°C, 10 mbar, 400 g/h) gereinigt. Der Katalysator ging im Destillat über, zurück blieb reines α,ω-Bis(hydroxymethyl)polydimethylsiloxan.

### Beispiel 5

### Herstellung einer Verbindung der allgemeinen Formel I

1000 g Me-Siloxan (α,ω-Bishydroxy-terminiertes Polydimethylsiloxan mit einem Mn von 2930 g/mol, bestimmt durch ¹H-NMR-Spektroskopie; entsprechend 341,3 mmol Polydimethylsiloxan mit 682,6 mmol SiOH-Gruppen) wurden bei 20 °C mit 60,2 g eines Gemischs, welches zu 95% aus 2,2,5,5-Tetramethyl-2,5-disila-1,4-dioxacyclohexan (Verbindung **1**) und zu 5% aus Oligomeren des 2,2,5,5-Tetramethyl-2,5-disila-1,4-dioxacyclohexan bestand (entspricht insgesamt 683 mmol an Einheiten [OCH₂(SiMe₂)]) und 0,5 g Tetramethylguanidin (Katalysator) (500 ppm bezogen auf Me-Siloxan) umgesetzt. Das Oligomer des 2,2,5,5-Tetramethyl-2,5-disila-1,4-dioxacyclohexans bestand hauptsächlich aus H-[0-CH₂-SiMe₂]ₙ-OH (n ≥ 1; hauptsächlich n >> 1; entspricht für n > 1 einer Verbindung der Struktur **3**) und aus H-[O-CH₂-SiMe₂]ₙ-O-[SiMe₂-CH₂-O]_{b}-H (entspricht einer Verbindung der Struktur **3** mit n = d, b = f, e = 0; n ≥ 1, b ≥ 2; hauptsächlich n >> 1 und b >> 2). Die Verbindungen der Struktur **3** entstanden durch Einwirkung von Feuchtigkeit auf 2,2,5,5-Tetramethyl-2,5-disila-1,4-dioxacyclohexan. ¹H-NMR und ²⁹Si-NMR zeigten, dass nach 8 Stunden alle SiOH-Gruppen zu Si-O-SiMe₂-CH₂OH-Einheiten (Hydroxymethyleinheiten) umgesetzt waren. Zur Entfernung des Katalysators wurde das Rohprodukt durch Dünnschicht-Destillation (130°C, 10 mbar, 400 g/h) gereinigt. Zurück blieb reines α,ω-Bis(hydroxymethyl)polydimethylsiloxan. Dieses Beispiel zeigt, dass sowohl 2,2,5,5-Tetramethyl-2,5-disila-1,4-dioxacyclohexan als auch seine Oligomeren zur Derivatisierung von SiOH-Gruppen geeignet sind.

### Beispiel 6

### Herstellung einer Verbindung der allgemeinen Formel I

Die Umsetzung erfolgt wie in Beispiel 1, mit dem Unterschied, dass 0,1 g (100 ppm) Natriummethanolat (Katalysator) anstelle des Tetramethylguanidins eingesetzt wurden. Das Reaktionsgemisch wurde 90 Minuten bei 20-30 °C gerührt, dann wurde der Katalysator durch Zugabe stöchiometrischer Mengen an Essigsäure neutralisiert (Bildung von Natriumacetat). Das Gemisch wurde weitere 60 Minuten bei 20-30 °C gerührt, das Neutralisationsprodukt Methanol wurde im Vakuum entfernt und ausgefallenes Natriumacetat wurde abfiltriert. Man erhielt reines α,ω-Bis-(hydroxymethyl)polydimethylsiloxan.

### Beispiel 7

### Herstellung einer Verbindung der allgemeinen Formel I

1000 g Siliconöl (α,ω-Bishydroxy-terminiertes Polymethylvinylsiloxan mit einem Vinyl:Methyl-Verhältnis von 1:4 und einem Mn von 2800 g/mol, bestimmt durch ¹H-NMR-Spektroskopie; entsprechend 357,1 mmol Polymethylvinylsiloxan mit 714,3 mmol SiOH-Gruppen) wurden bei 70-100 °C mit 63,0 g (357,2 mmol) 2,2,5,5-Tetramethyl-2,5-disila-1,4-dioxacyclohexan (Verbindung **1**) und 100 mg Ameisensäure (Katalysator) umgesetzt. ¹H-NMR und ²⁹Si-NMR zeigten, daß nach 3 Stunden alle SiOH-Gruppen zu Si-O-SiMe₂-CH₂OH-Einheiten (Hydroxymethyleinheiten) umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines α,ω-Bis(hydroxymethyl)polymethylvinylsiloxan.

### Beispiel 8

### Herstellung einer Verbindung der allgemeinen Formel VIII

3,40 g Siloxan (α,ω-Bishydroxy-terminiertes Polydimethylsiloxan mit einem Mn von 1336 g/mol, bestimmt durch ¹H-NMR-Spektroskopie; entsprechend 2,545 mmol Siloxan mit 5,09 mmol SiOH-Gruppen) wurden bei 20 °C mit 1,00 g (5,67 mmol) 2,2,5,5-Tetramethyl-2,5-disila-1,4-dioxacyclohexan (Verbindung **1**) und 170 mg basischem Aluminiumoxid (Brockmann Aktivität I) (Katalysator) versetzt. Das Gemisch wurde 2 Stunden bei 120 °C gerührt. ¹H-NMR zeigte, dass nach 2 Stunden alle SiOH-Gruppen zu Einheiten Si-O-[(SiMe₂-CH₂-O)ᵢ-H]-Einheiten umgesetzt waren (mittleres i gleich rund 2).

### Beispiel 9

### Herstellung einer Verbindung der allgemeinen Formel I

Ein Produkt hergestellt gemäß Beispiel 8 wurde mit 4,17 g Siloxan (α,ω-Bishydroxy-terminiertes Polydimethylsiloxan mit einem Mn von 1336 g/mol, bestimmt durch ¹H-NMR-Spektroskopie; entsprechend 3,12 mmol Siloxan mit 6,24 mmol SiOH-Gruppen) versetzt. Das Gemisch wurde 2 Stunden bei 120 °C gerührt. ¹H-NMR zeigte, dass nach 2 Stunden alle SiOH-Gruppen mit Si-O-[(SiMe₂-CH₂-O)ᵢ-H]-Einheiten zu Si-O-SiMe₂-CH₂OH-Einheiten (Hydroxymethyleinheiten) umgesetzt waren. Das Aluminiumoxid wurde nach dem Abkühlen auf 20 °C abzentrifugiert, im Überstand verblieb reines α,ω-Bis(hydroxymethyl)polydimethylsiloxan.

### Beispiel 10

### Herstellung einer Verbindung der allgemeinen Formel I

Ein Produkt hergestellt gemäß Beispiel 8 wurde mit 1,00 g Wasser (Solvolysereagenz, Hydrolyse) und 2 mL 1,4-Dioxan versetzt. Das Gemisch wurde 2 Stunden zum Rückfluss erhitzt. ¹H-NMR zeigte, dass nach 2 Stunden alle Si-O-[(SiMe₂-CH₂-O)ᵢ-H]-Einheiten zu Si-O-SiMe₂-CH₂OH-Einheiten (Hydroxymethyleinheiten) umgesetzt waren (erfindungsgemäß). Nebenprodukt der Hydrolyse war 1,3-Bis(hydroxymethyl)-1,1,3,3-tetramethyldisiloxan (nicht erfindungsgemäß). Das Aluminiumoxid wurde nach dem Abkühlen auf 20 °C abzentrifugiert. Der Überstand wurde im Kugelrohrverdampfer (130 °C, 0,1 mbar) von 1,3-Bis(hydroxymethyl)-1,1,3,3-tetramethyldisiloxan befreit. Zurück blieb reines α,ω-Bis-(hydroxymethyl)polydimethylsiloxan.

### Beispiel 11

### Herstellung von Verbindungen der Struktur 3

11 g 2,2,5,5-Tetramethyl-2,5-disila-1,4-dioxacyclohexan (Verbindung **1**) wurde mit wenigen Tropfen Methanol versetzt und bei Raumtemperatur 24 Stunden verschlossen aufbewahrt. Die NMR-Analytik zeigte, dass ca. 30% unverändert vorlagen, der Rest (ca. 70%) waren zu Verbindungen der Struktur HO-[O-CH₂-SiR²₂]ₙ-OMe umgesetzt, dies entspricht Strukturen der Formel III mit Z = H, Y = OCH₃, R² = Me und n(Mittelwert) = 50 bzw. Strukturen **3** mit d(Mittelwert) = 50, e = 0, f = 0 und R = Me.

### Beispiel 12

### Herstellung einer Verbindung der allgemeinen Formel I

201,2 g Me-Siloxan (α,ω-Bishydroxy-terminiertes Polydimethylsiloxan) mit einem Mn von 3557 g/mol, bestimmt durch ¹H-NMR-Spektroskopie; entsprechend 56,6 mmol Polydimethylsiloxan mit 113 mmol SiOH-Gruppen) wurde bei Raumtemperatur mit 11,06 g (125 mmol Me₂Si-CH₂O-Einheiten) eines Gemischs der Verbindungen 2,2,5,5-Tetramethyl-2,5-disila-1,4-dioxacyclohexan (Verbindung **1,** Anteil ca. 30 %) und eines Oligomers der Formel III Z-[O-CH₂-SiR²₂]ₙ-Y mit Z = H, Y = OCH₃, R² = Me und n(Mittelwert) = 50 (Anteil ca. 70 %; entspricht einer Verbindung der Struktur **3**) (Produkt aus Beispiel 11) in Gegenwart von 0,39 g (3,39 mmol, entspr. ca. 1800 ppm) Tetramethylguanidin (Katalysator) umgesetzt. ¹H-NMR und ²⁹Si-NMR zeigten, dass nach 24 Stunden alle SiOH-Gruppen zu Si-O-SiMe₂-CH₂OH-Einheiten (Hydroxymethyleinheiten) umgesetzt waren. Zur Entfernung des Katalysators wurde das Rohprodukt 2 Stunden bei 0,03 Torr auf 100 °C erwärmt. Der Rückstand bestand aus α,ω-Bishydroxy-methyl)polydimethylsiloxan.

### Beispiel 13

### Herstellung einer Verbindung der allgemeinen Formel I

201,2 g Me-Siloxan (α,ω-Bishydroxy-terminiertes Polydimethylsiloxan) mit einem Mn von 3557 g/mol, bestimmt durch ¹H-NMR-Spektroskopie; entsprechend 56,6 mmol Polydimethylsiloxan mit 113 mmol SiOH-Gruppen) wurden bei 50°C mit 11,06 g (125 mmol Me₂Si-CH₂O-Einheiten) eines Gemischs der Verbindungen 2,2,5,5-Tetramethyl-2,5-disila-1,4-dioxacyclohexan (Verbindung **1,** Anteil ca. 30 %) und eines Oligomers der Formel III Z-[O-CH₂-SiR²₂]ₙ-Y mit Z = H, Y = OCH₃, R² = Me und n(Mittelwert) = 50 (Anteil ca. 70 %; entspricht einer Verbindung der Struktur **3**) in Gegenwart von 0,106 g (0,92 mmol, entspr. ca. 500 ppm) Tetramethylguanidin (Katalysator) umgesetzt. ¹H-NMR und ²¹Si-NMR zeigten, dass nach 60 Minuten 94 % aller SiOH-Gruppen zu Si-O-SiMe₂-CH₂OH-Einheiten (Hydroxymethyleinheiten) umgesetzt waren.

### Beispiel 14

### Herstellung von Verbindungen der Struktur 4.

1,41 g (8,0 mmol) 2,2,5,5-Tetramethyl-2,5-disila-1,4-dioxa-cyclohexan (Verbindung **1**) und 50 mg Phosphornitrilchlorid (Katalysator) wurden 18 Stunden bei 20 °C gerührt. Hernach waren per GC und GC/MS neben der Verbindung **1** (Anteil am Gemisch: 90%, GC) die Verbindungen der Strukturen **4p, 4q, 4r** und **4s** detektierbar (MS [*m*/*z*]: **4p,** 264; **4q,** 352; **4r,** 440; **4s,** 528; jeweils [M⁺]).

### Beispiel 15

### Herstellung von Verbindungen der Struktur 4.

1,76 g (10,0 mmol) 2,2,5,5-Tetramethyl-2,5-disila-1,4-dioxa-cyclohexan (Verbindung **1**) und 60 mg Phosphornitrilchlorid (Katalysator) wurden 7 Stunden bei 100 °C gerührt. Hernach waren per GC und GC/MS neben der Verbindung **1** (Anteil am Gemisch: 71%, GC) die Verbindungen der Strukturen **4p** und **4q** detektierbar (MS [*m*/*z*]: **4p,** 264; **4q,** 352; jeweils [M⁺]).

### Beispiel 16

### Herstellung von Verbindungen der Struktur 4.

3,50 g (20,0 mmol) 2,2,5,5-Tetramethyl-2,5-disila-1,4-dioxa-cyclohexan (Verbindung **1**) und 180 mg Tonsil® (Katalysator) wurden 4 Stunden bei 100 °C gerührt. Hernach waren per GC und GC/MS neben der Verbindung **1** (Anteil am Gemisch: 63%, GC) die Verbindungen der Strukturen **4p, 4q, 4r** und **4s** detektierbar (MS [*m*/*z*] : **4p,** 264; **4q,** 352; **4r,** 440; **4s,** 528; jeweils [M⁺]).

### Beispiel 17

### Herstellung von Verbindungen der Struktur 4.

3,50 g (19,8 mmol) 2,2,5,5-Tetramethyl-2,5-disila-1,4-dioxa-cyclohexan (Verbindung **1**), 3,00 g (10,1 mmol) Octamethylcyclotetrasiloxan und 60 mg Phosphornitrilchlorid (Katalysator) wurden 2 Stunden bei 20 °C gerührt. Die Lösung wurde viskos. Das Gemisch wurde ungestört 18 weitere Stunden bei 20 °C stehengelassen. Hernach waren per GC und GC/MS neben der Verbindung **1** (Anteil am Gemisch: 11%, GC) die Verbindungen der Strukturen **4a-4u** detektierbar, vorwiegend die Verbindungen **4a-e.**

### Beispiel 18

### Herstellung von Verbindungen der Struktur 4.

3,50 g (19,8 mmol) 2,2,5,5-Tetramethyl-2,5-disila-1,4-dioxa-cyclohexan (Verbindung **1**), 7,40 g (20,0 mmol) Decamethylcyclopentasiloxan und 0,12 g Phosphornitrilchlorid (Katalysator) wurden 25 Stunden bei 20 °C gerührt. Die Lösung wurde viskos. Das Gemisch wurde ungestört 18 weitere Stunden bei 20 °C stehengelassen. Hernach waren per GC und GC/MS neben der Verbindung **1** (Anteil am Gemisch: 24%, GC) die Verbindungen der Strukturen **4a-4u** detektierbar, vorwiegend die Verbindungen **4a-e.**

### Beispiel 19

### Herstellung von Verbindungen der Struktur 3.

7,06 g (40,0 mmol) 2,2,5,5-Tetramethyl-2,5-disila-1,4-dioxa-cyclohexan (Verbindung **1**) und 36,0 mg (2,00 mmol) Wasser (entspricht ROH als Solvolysereagenz mit R = H) wurden in 5 mL Tetrahydrofuran (THF) gelöst und 2 Tage bei 20 °C gerührt. Hernach waren per GC und GC/MS neben der Verbindung **1** die Verbindungen HOCH₂SiMe₂OH, HOCH₂SiMe₂OSiMe₂CH₂OH und Verbindungen der Struktur **3** mit R = H, e = 0, d ≥ 1 und f ≥ 2 detektierbar. Eine analoge Durchführung mit Zusatz von 0,07 g Tributylamin (Katalysator) führte zu einem identischen Ergebnis.

### Beispiel 20

### Herstellung von Verbindungen der Struktur 3.

0,948 g (5,38 mmol) 2,2,5,5-Tetramethyl-2,5-disila-1,4-dioxa-cyclohexan (Verbindung **1**) wurden mit 0,172 g (5,38 mmol) Methanol gemischt und bei Raumtemperatur 7 Tage verschlossen aufbewahrt. Es erfolgte eine Umsetzung zu der Verbindung HOCH₂Si(OMe)Me₂ sowie zu Verbindungen der Struktur **3** (= Oligomere mit R = Me, e = 0, f = 0, d = ≥ 2, v.a. d = 2-10); deren NMR-spektroskopisch bestimmter Anteil betrug insgesamt ca. 89%; außerdem wurden 11% nicht-umgesetztes 2,2,5,5-Tetramethyl-2,5-disila-1,4-dioxacyclohexan (Verbindung **1**) nachgewiesen.

### Beispiel 21

### Herstellung von Verbindungen der Struktur 3.

0,948 g (5,38 mmol) 2,2,5,5-Tetramethyl-2,5-disila-1,4-dioxa-cyclohexan (Verbindung **1**) wurden mit 0,344 g (10,6 mmol) Methanol gemischt und bei Raumtemperatur 24 Std. verschlossen aufbewahrt. Es erfolgte eine Umsetzung zu der Verbindung HOCH₂Si(OMe)Me₂ sowie zu Verbindungen der Struktur **3** (= Oligomere mit R = Me, e = 0, f = 0, d = ≥ 2, v.a. d = 2-10); deren NMR-spektroskopisch bestimmter Anteil betrug insgesamt ca. 91%, außerdem werden 9% nicht-umgesetztes 2,2,5,5-Tetramethyl-2,5-disila-1,4-dioxacyclohexan (Verbindung **1**) nachgewiesen.

### Beispiel 22

### Herstellung von Verbindungen der Struktur 3.

11,02 g des Produktgemisches aus Beispiel 18 wurden mit 0,64 g Methanol (entspricht ROH als Solvolysereagenz mit R = Me) 7 Tage bei 20 °C gerührt. Hernach waren per GC und GC/MS neben Verbindung **1** (18%, GC), Verbindungen der Struktur **4** (45%, GC) und HOCH₂Si(OMe)Me₂ Verbindungen der Struktur **3** mit R = Me, e ≥ 0, d ≥ 1 und f = 0 detektierbar, hauptsächlich Vertreter mit e = 1 oder 2 und d = 1 oder 2.

### Beispiel 23

### Herstellung von Verbindungen der Struktur 4.

3,50 g (19,8 mmol) 2,2,5,5-Tetramethyl-2,5-disila-1,4-dioxa-cyclohexan (Verbindung **1**), 4,45 g (20,0 mmol) Hexamethylcyclotrisiloxan und 0,12 g Phosphornitrilchlorid wurden 1 Stunde bei 20 °C gerührt. Die Lösung wurde viskos. Hernach waren per GC und GC/MS neben der Verbindung **1** (Anteil am Gemisch: 7%, GC) die Verbindungen der Strukturen **4a-4s** detektierbar (GC: 4a 38%, 4b 11%, 4c 1%, 4d 2,5%, 4e 14%, 4k 1%, 4u 4%; der Rest bestand aus anderen Verbindungen der Struktur **4**).

## Patentansprüche

1. Verfahren zur Herstellung von (Hydroxymethyl)polysiloxanen der allgemeinen Formel I
(SiO_{4/2})ₖ(R¹SiO_{3/2})ₘ(R¹₂SiO_{2/2})ₚ(R¹₃SiO_{1/2})_{q} [O_{1/2}- (SiR²₂-X-Y-)ₐSiR²₂-CH₂-OH]ₛ[O_{1/2}H]ₜ Formel I,
bei dem Silanol-haltige Organosiloxane der allgemeinen Formel II
(SiO_{4/2})ₖ(R¹SiO_{3/2})ₘ(R¹₂SiO_{2/2})ₚ(R¹₃SiO_{1/2})_{q}[O_{1/2}H]ᵣ Formel II
mit cyclischen oder acyclischen Verbindungen, die mindestens eine Einheit der allgemeinen Formel III
Z-[O-CH₂-SiR²₂]ₙ-Y Formel III
aufweisen, umgesetzt werden, wobei
**R¹** ein Wasserstoffatom oder einen gegebenenfalls mit **Q¹** substituierten, gegebenenfalls durch eine oder mehrere heteroatomhaltige Gruppen **Q²** unterbrochenen, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest,
**R²** einen gegebenenfalls mit **Q¹** substituierten, gegebenenfalls durch ein oder mehrere heteroatomhaltige Gruppen **Q²** unterbrochenen oder ein oder mehrere heteroatomhaltige Gruppen **Q²** enthaltenden, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest oder Si₁-Si₂₀ Siloxanylrest,
**Q¹** einen heteroatomhaltigen einbindigen Rest,
**Q²** einen heteroatomhaltigen zweibindigen Rest oder einen heteroatomhaltigen dreibindigen Rest bedeutet,
**Z** für Wasserstoff, für eine Gruppe **X-SiR²₂-,** oder zusammen mit Y für ein Bindungselektronenpaar steht,
**X** für eine Gruppe R², für eine Siloxangruppe oder für ein Bindungselektronenpaar zu Y steht oder mit Y verbunden sein kann oder X zusammen mit Y ein Sauerstoffatom bedeutet oder ein an Y gebundenes Sauerstoffatom bedeutet,
**Y** Bedeutungen ausgewählt aus den Bedeutungen von **R²** oder **Q¹** oder **Q²** annehmen kann oder für einen Siloxanrest oder für eine hydrolysierbare Gruppe einschließlich Hydroxygruppe oder zusammen mit Z für ein Bindungselektronenpaar steht und mit Z via X verbunden sein kann und durch eine oder mehrere gegebenenfalls substituierte Siloxangruppen unterbrochen sein kann oder zusammen mit X ein Sauerstoffatom bedeutet,
mit der Maßgabe, dass **Y,** wenn n = 1 ist, eine hydrolysierbare Gruppe oder einen Siloxanrest, der mindestens eine hydrolysierbare Gruppe beinhaltet, oder zusammen mit X ein Sauerstoffatom bedeutet oder mit X verbunden ist oder zusammen mit Z für eine Bindung steht,
**s** Werte von mindestens 1,
**r** Werte von mindestens 1,
**t** Werte von mindestens 0,
**n** Werte von mindestens 1,
die Summe **s + t** den Wert von r,
**k, m, p, q** Werte größer oder gleich Null bedeuten, mit der Maßgabe, dass die Summe **k + m + p + q** eine Summe von mindestens 2 bedeutet,
a den Wert 0 oder 1 annimmt.

2. Verfahren zur Herstellung von (Hydroxymethyl)polysiloxanen nach Anspruch 1, **dadurch gekennzeichnet, dass** als Silanol-haltige Organosiloxane bzw. Organosiloxanharze der Formel II Verbindungen nach folgender Formel IIa
H[OSiR¹¹₂]_{α}OH Formel IIa,
wobei α ganzzahlige Werte von 2 bis 20000 und
**R¹¹** Methyl, Ethyl, Vinyl, Allyl oder Phenyl bedeutet, verwendet werden.

3. Verfahren zur Herstellung von (Hydroxymethyl)polysiloxanen nach Anspruch 1 oder 2, **dadurch gekennzeichnet, dass** als Verbindungen der Formel III Verbindungen nach folgender Formel IIIa eingesetzt werden,
Z-[O-CH₂-SiR¹²₂]ₙ-Y Formel IIIa,
wobei **R¹²** die Bedeutungen Methyl, Ethyl, Vinyl, Allyl, Phenyl, Methoxy, Ethoxy, *n*-Propoxy, *iso*-Propoxy, *n*-Butoxy, *iso*-Butoxy, *sec*-Butoxy, *tert*-Butoxy, *n*-Pentoxy, *tert-*Pentoxy oder *n*-Hexoxy annehmen kann,
und **n, Y** und **Z** dieselben Bedeutungen annehmen können wie oben definiert.

4. Verfahren zur Herstellung von (Hydroxymethyl)polysiloxanen nach Anspruch 1, **dadurch gekennzeichnet, dass** als Produkt der Formel I folgende Verbindungen der Formel Ia
HOCH₂SiR¹²₂[OSiR¹¹₂]_{α}OSiR¹²₂CH₂OH Formel-Ia,
wobei α ganzzahlige Werte von 2 bis 20000 bedeutet und
R¹¹ und R¹² die oben definierten Bedeutungen haben, hergestellt werden, wobei Verbindungen der Formel IIa mit Verbindungen der Formel IIIa umgesetzt werden.

5. Verfahren zur Herstellung von (Hydroxymethyl)polysiloxanen nach einem oder mehreren der vorigen Ansprüche, **dadurch gekennzeichnet, dass** mindestens eine der eingesetzten Verbindungen der Formel III ausgewählt wird aus Verbindungen der folgenden allgemeinen Formeln IV, V, VI, VII oder VIII, 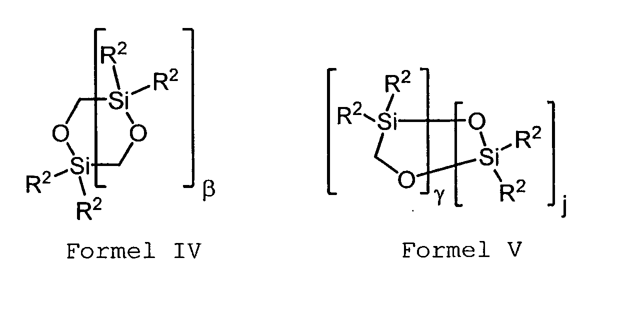 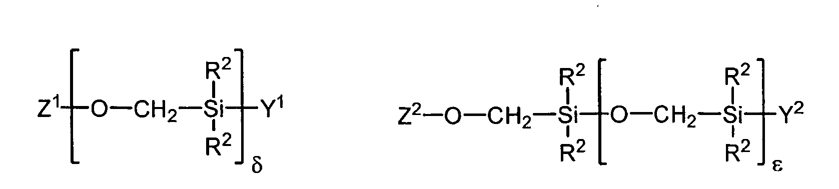 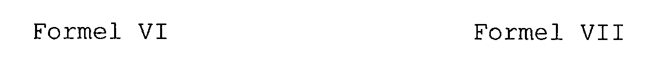
(SiO_{4/2})ₖ(R¹SiO_{3/2})ₘ(R¹₂SiO_{2/2})ₚ(R¹₃SiO_{1/2})_{q} [O_{1/2}-(SiR²₂-X-Y-)ₐ(SiR²₂-CH₂-O)ᵢZ³]ᵤ [O_{1/2}-(SiR²₂-X-Y-)ₐSiR²₂-CH₂-OZ³]ᵥ[O_{1/2}Z⁴]_{w} Formel VIII,
wobei
**R¹** in Formel VIII dieselben Bedeutungen annehmen kann wie oben definiert,
**R²** in den Formeln IV-VIII dieselben Bedeutungen annehmen kann wie oben definiert,
**β, γ, δ, ε** dieselben Bedeutungen wie n wie oben definiert annehmen können,
**i** einen ganzzahligen Wert größer oder gleich 2 annehmen kann,
**j** in Formel V einen ganzzahligen Wert größer oder gleich 0 bedeutet,
**k, m, p** und **q** und ihre oben definierte **Summe** in Formel VIII dieselben Werte wie oben definiert annehmen können,
**u** in Formel VIII einen Wert größer oder gleich 1 annehmen kann,
**v** in Formel VIII einen Wert größer oder gleich 0 annehmen kann,
**w** in Formel VIII einen Wert größer oder gleich 0 annehmen kann,
**Y¹** in Formel VI für einen Rest R², für einen Rest -O-(SiR²₂-CH₂-O)_{b}Z¹, für ein Wasserstoffatom oder für eine hydrolysierbare Gruppe steht,
mit der Maßgabe, dass **Y¹,** wenn δ in Formel VI die Bedeutung 1 annimmt, für eine hydrolysierbare Gruppe, einschließlich Alkoxy-, Aryloxy-, Hydroxygruppe oder ein Wasserstoffatom,
oder für für einen Rest -O-(SiR²₂-CH₂-O)_{b}H mit b größer oder gleich 2 steht,
**b** für Werte größer oder gleich 1 steht,
**Y²** in Formel VII für einen Rest R², für einen Rest -O-(SiR²₂-CH₂-O)_{c}Z², für ein Wasserstoffatom oder für eine hydrolysierbare Gruppe einschließlich Hydroxygruppe steht,
**c** für Werte größer oder gleich 1 steht,
**Z¹** für ein Wasserstoffatom, für eine über ein Siliciumatom gebundene Silylgruppe oder für eine über ein Siliciumatom gebundene Siloxanylgruppe steht,
**Z²** für ein Wasserstoffatom, für eine über ein Siliciumatom gebundene Silylgruppe, für eine über ein Siliciumatom gebundene Siloxanylgruppe, oder - wenn ε in Formel VII einen Wert größer oder gleich 2 annimmt oder Y² eine hydrolysierbare Gruppe ist - für eine gegebenenfalls mit Q¹ substituierte oder durch eine oder mehrere Gruppen Q² unterbrochene Alkyl-, Aryl- oder Acylgruppe steht,
**Z³** für ein Wasserstoffatom, für eine über ein Siliciumatom gebundene Silylgruppe, für eine über ein Siliciumatom gebundene Siloxanylgruppe, oder - wenn i in Formel VIII einen Wert größer oder gleich 3 annimmt - für eine gegebenenfalls mit Q¹ substituierte oder durch eine oder mehrere Gruppen Q² unterbrochene Alkyl-, Aryl- oder Acylgruppe steht,
**Z⁴** dieselben Bedeutungen annehmen kann wie Z¹,
**a** dieselben Bedeutungen annehmen kann wie oben definiert.

6. Verfahren nach einem oder mehreren der vorigen Ansprüche, **dadurch gekennzeichnet, dass** mindestens eine der eingesetzten Verbindungen der Formel III ausgewählt wird aus Verbindungen nach folgender Formel IIIb 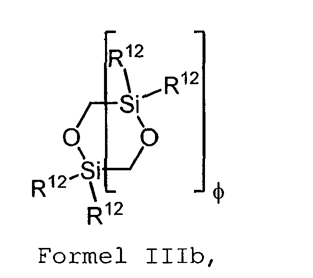 wobei R¹² dieselben Bedeutungen annehmen kann wie oben definiert und wobei φ ganzzahlige Werte größer oder gleich 1 annehmen kann.

7. Verfahren nach einem oder mehreren der Ansprüche 1 bis 6, wobei zumindest ein Silylierungsmittel zugesetzt wird und das entstehende silylierte Zwischenprodukt durch Solvolyse mit protischen Verbindungen in Verbindungen der Formel I überführt wird.

8. Verfahren nach einem oder mehreren der Ansprüche 1 bis 6, wobei mindestens eine der beteiligten Verbindungen mit einem Silylierungsmittel umgesetzt wird, das die Struktur R¹₃Si-AG aufweist, wobei die Gruppe AG für eine hydrolysierbare Abgangsgruppe steht.

9. Verfahren nach einem oder mehreren der vorigen Ansprüche, wobei ein Überschuss an Verbindungen der Formel III eingesetzt wird und wobei als Zwischenprodukt entstehende Verbindungen der Formel VIII durch Solvolyse mit protischen Verbindungen oder durch Thermolyse teilweise oder vollständig in Verbindungen der Formel I überführt werden, wobei Überschuss bedeutet, dass die Stoffmenge an insgesamt in den eingesetzten Verbindungen der Formel III vorhandenen Struktureinheiten [OCH₂SiR²₂] einen Wert größer als die Stoffmenge an insgesamt in den eingesetzten Verbindungen der Formel I vorhandenen Struktureinheiten [O_{1/2}H] annimmt.

10. Verfahren zur Herstellung von Verbindungen der allgemeinen Formel VIII einsetzbar in einem Verfahren nach einem der Ansprüche 1 bis 9, **dadurch gekennzeichnet, dass** Gemische enthaltend mindestens eine Verbindung der allgemeinen Formel II oder der allgemeinen Formel I mit einem Überschuss an Verbindungen der Formel IV, V, VI, VII oder einer zweiten Verbindung der Formel VIII umsetzt, wobei Überschuss bedeutet, dass die Stoffmenge an insgesamt in den eingesetzten Verbindungen der Formel IV, V, VI, VII oder einer zweiten Verbindung der Formel VIII vorhandenen Struktureinheiten [OCH₂SiR²₂] einen Wert größer als die Stoffmenge an insgesamt in den eingesetzten Verbindungen der Formel I und II vorhandenen Struktureinheiten [O_{1/2}H] annimmt.

11. Verbindungen der Formel III mit der Struktur 3, 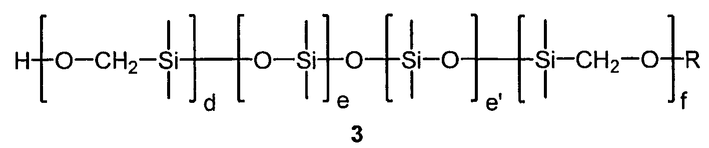 wobei d ganzzahlige Werte größer oder gleich 1, e ganzzahlige Werte größer oder gleich 0, e' ganzzahlige Werte größer oder gleich 0 und f ganzzahlige Werte von 0 oder größer oder gleich 2 annehmen kann, und wobei R die Bedeutungen Wasserstoff, Methyl, Ethyl, *n*-Propyl, *iso-*Propyl, *n*-Butyl, *sec*-Butyl, *iso*-Butyl, *tert*-Butyl, *n-*Pentyl, *sec*-Pentyl (1-Methylbutyl oder 1-Ethylpropyl), *iso-*Pentyl (2-Methylbutyl oder 3-Methylbutyl), *neo*-Pentyl, *tert*-Pentyl, *n*-Hexyl, *n*-Octyl, Benzyl, Phenyl, 2-Methylphenyl, 3-Methylphenyl, 4-Methylphenyl, Cyclopentyl oder Cyclohexyl annehmen kann, und wobei R, wenn f ungleich 0 ist, Wasserstoff bedeutet, und wobei d, wenn e gleich 0 und e' gleich 0 und f gleich 0 ist, ganzzahlige Werte größer oder gleich 2 annehmen kann.

12. Verbindungen der Formel III mit der Struktur **4,** 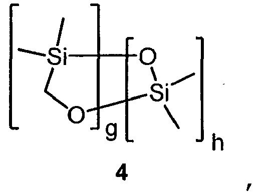 wobei g ganzzahlige Werte größer oder gleich 1 und h ganzzahlige Werte größer oder gleich 0 und die Summe aus g + h ganzzahlige Werte größer oder gleich 3 annehmen kann.

13. Verfahren zur Herstellung von Verbindungen der Struktur **3** nach Anspruch 11, **dadurch gekennzeichnet, dass** Verbindungen der Struktur **1, 2,** 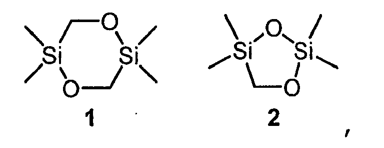 oder **4 nach** Anspruch 12, mit Wasser oder Alkoholen umgesetzt werden.

14. Verfahren zur Herstellung von Verbindungen der Struktur **4** nach Anspruch 12, **dadurch gekennzeichnet, dass** Verbindung **1** nach Anspruch 13, gelagert oder erhitzt wird, in Gegenwart einer Stoffmenge an [Me₂SiO]-Äquivalenten, die mindestens der Summe der Stoffmenge an [SiMe₂-O-]-Gruppen in den herzustellenden Verbindungen der Struktur **4** entspricht.

## Claims

1. Method for producing (hydroxymethyl)polysiloxanes of the general formula I
(SiO_{4/2})ₖ(R¹SiO_{3/2})ₘ(R¹₂SiO_{2/2})ₚ(R¹₃SiO_{1/2})_{q} [O_{1/2}-(SiR²₂-X-Y-)ₐSiR²₂-CH₂-OH]ₛ[O_{1/2}H]ₜ formula I,
which comprises reacting silanol-containing organosiloxanes of the general formula II
(SiO_{4/2})ₖ(R¹SiO_{3/2})ₘ(R¹₂SiO_{2/2})ₚ(R¹SiO_{1/2})_{q}[O_{1/2}H]ᵣ formula II
with cyclic or acyclic compounds which include at least one unit of the general formula III
Z-[O-CH₂-SiR²₂]ₙ-Y formula III
where
**R¹** denotes a hydrogen atom or a cyclic or acyclic, linear or branched, aromatic or aliphatic or olefinic, saturated or unsaturated C₁-C₂₀ hydrocarbon, C₁-C₂₀ hydrocarbonoxy or C₄-C₄₀ polyether moiety optionally substituted with **Q¹** and optionally interrupted by one or more heteroatom-containing groups **Q**²,
**R**² denotes a cyclic or acyclic, linear or branched aromatic or aliphatic or olefinic, saturated or unsaturated C₁-C₂₀ hydrocarbon, C₁-C₂₀ hydrocarbonoxy, C₄-C₄₀ polyether or Si₁-Si₂₀ siloxanyl moiety optionally substituted with **Q**¹, optionally interrupted by one or more heteroatom-containing groups **Q**² or containing one or more heteroatom-containing groups **Q²,**
**Q¹** denotes a heteroatom-containing monovalent moiety,
**Q²** denotes a heteroatom-containing divalent moiety or a heteroatom-containing trivalent moiety,
**Z** represents hydrogen, a group **X-SiR**²₂-, or combines with Y to represent a bonding electron pair,
**X** represents a group R², a siloxane group or a bonding electron pair to Y or may be bonded to Y or X combines with Y to denote an oxygen atom or denotes an oxygen atom attached to Y,
**Y** may assume meanings selected from the meanings of **R²** or **Q¹** or **Q²** or represents a siloxane moiety or a hydrolysable group inclusive hydroxyl or combines with Z to represent a bonding electron pair and may be attached to Z via X and may be interrupted by one or more optionally substituted siloxane groups or combines with X to denote an oxygen atom, with the proviso that **Y** in the case of n = 1 denotes a hydrolysable group or a siloxane moiety which contains at least one hydrolysable group or combines with X to denote an oxygen atom or is attached to X or combines with Z to represent a bond,
**s** assumes values of at least 1,
**r** assumes values of at least 1,
**t** assumes values of at least 0,
**n** assumes values of at least 1, the sum **s + t** assumes the value of r,
**k, m, p, q** denote values not less than zero, with the proviso that the sum **k + m + p + q** denotes a sum of at least 2,
**a** assumes the value 0 or 1.

2. Method for producing (hydroxymethyl)polysiloxanes according to Claim 1, **characterized in that** the silanol-containing organosiloxanes/organosiloxane resins used of formula II are compounds conforming to the following formula IIa:
H [OSiR¹¹₂]_{α}OH formula IIa,
where α denotes whole-numbered values of 2 to 20 000 and
**R¹¹** denotes methyl, ethyl, vinyl, allyl or phenyl.

3. Method for producing (hydroxymethyl)polysiloxanes according to Claim 1 or 2, **characterized in that** the formula III compounds used are compounds conforming to the following formula IIIa:
Z- [O-CH₂-SiR¹²₂]ₙ-Y formula IIIa,
where **R¹²** may assume the meanings methyl, ethyl, vinyl, allyl, phenyl, methoxy, ethoxy, n-propoxy, isopropoxy, n-butoxy, isobutoxy, sec-butoxy, tert-butoxy, n-pentoxy, tert-pentoxy or n-hexoxy,
and **n, Y** and **Z** may assume the same meanings as defined above.

4. Method for producing (hydroxymethyl)polysiloxanes according to Claim 1, **characterized in that** the formula I product produced are the following compounds of formula Ia:
HOCH₂SiR¹²₂[OSiR¹¹₂]_{α}OSiR¹²₂CH₂OH formula Ia,
where α denotes whole-numbered values of 2 to 20 000 and
R¹¹ and R¹² have the above-defined meanings, by reacting compounds of formula IIa with compounds of formula IIIa.

5. Method for producing (hydroxymethyl)polysiloxanes according to one or more of the preceding claims, **characterized in that** at least one of the formula III compounds used is selected from compounds of the following general formulae IV, V, VI, VII or VIII: 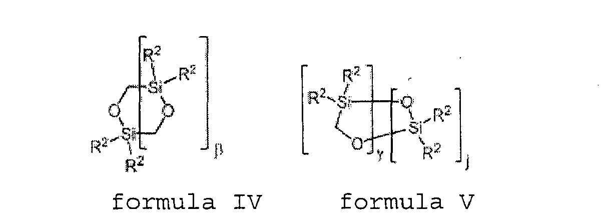 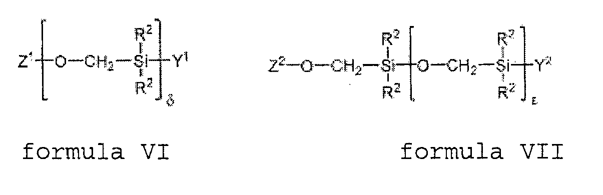
(SiO_{4/2})ₖ(R¹SiO_{3/2})ₘ(R¹₂SiO_{2/2})ₚ(R¹SiO_{1/2})_{q} [O_{1/2}-(SiR²₂X-Y-)ₐ(SiR²₂-CH₂-O)ᵢZ³]ᵤ [O₁/₂-(SiR²₂-X-Y-)ₐSiR²₂-CH₂-OZ³]ᵥ[O_{1/2}Z⁴]_{w} formula VIII,
where
**R**¹ in the formula VIII may assume the same meanings as defined above,
**R**² in the formulae IV-VIII may assume the same meanings as defined above,
**β, y, δ, ε** may assume the same meanings as n as defined above,
**i** may assume a whole-numbered value not less than 2,
**j** in formula V denotes a whole-numbered value not less than 0,
**k, m, p** and **q** and their above-defined **sum** in formula VIII may assume the same values as defined above,
**u** in formula VIII may assume a value not less than 1,
**v** in formula VIII may assume a value not less than 0,
**w** in formula VIII may assume a value not less than 0,
**Y¹** in formula VI represents a moiety R², a moiety -O-(SiR²₂-CH₂-O)_{b}Z¹, a hydrogen atom or a hydrolysable group, with the proviso that **Y**¹ when δ in formula VI assumes the meaning 1 represents a hydrolysable group inclusive alkoxy, aryloxy, or hydroxyl, or a hydrogen atom, or represents a moiety -O-(SiR²₂-CH₂-O)_{b}H with b not less than 2,
**b** represents values not less than 1,
**Y²** in formula VII represents a moiety R², a moiety -O- (SiR²₂-CH₂-O)_{c}Z², a hydrogen atom or a hydrolysable group inclusive hydroxyl,
**c** represents values not less than 1,
**Z**¹ represents a hydrogen atom, a silyl group attached via a silicon atom or a siloxanyl group attached via a silicon atom,
**Z**² represents a hydrogen atom, a silyl group attached via a silicon atom, a siloxanyl group attached via a silicon atom, or - when ε in formula VII assumes a value not less than 2 or Y² is a hydrolysable group - represents an alkyl, aryl or acyl group optionally substituted with Q¹ or interrupted by one or more groups Q²,
**Z**³ represents a hydrogen atom, a silyl group attached via a silicon atom, a siloxanyl group attached via a silicon atom, or - when i in formula VIII assumes a value not less than 3 - represents an alkyl, aryl or acyl group optionally substituted with Q¹ or interrupted by one or more groups Q²,
**Z**⁴ may assume the same meanings as Z¹,
**a** may assume the same meanings as defined above.

6. Method according to one or more of the preceding claims, **characterized in that** at least one of the formula III compounds used is selected from the compounds conforming to the following formula IIIb: 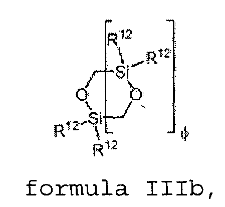 where R¹² may assume the same meanings as defined above and where ϕ may assume whole-numbered values not less than 1.

7. Method according to one or more of Claims 1 to 6, wherein at least one silylating agent is added and the resultant silylated intermediate is converted into compounds of formula I by solvolysis with protic compounds.

8. Method according to one or more of Claims 1 to 6, wherein at least one of the compounds involved is reacted with a silylating agent having the structure R¹₃Si-AG, where the AG group represents a hydrolysable leaving group.

9. Method according to one or more of the preceding claims, wherein an excess of compounds of formula III is used and wherein resultant intermediate compounds of formula VIII are wholly or partly converted into compounds of formula I by solvolysis with protic compounds or by thermolysis, wherein excess means that the amount of substance of total structural units [OCH₂SiR²₂] present in the formula III compounds used assumes a value greater than the amount of substance of total structural units [O_{1/2}H] present in the formula I compounds used.

10. Method for producing compounds of the general formula VIII useful in a method according to one of Claims 1 to 9, **characterized in that** mixtures containing at least one compound of the general formula II or of the general formula I are reacted with an excess of compounds of formula IV, V, VI, VII or of a second compound of formula VIII, wherein excess means that the amount of substance of total structural units [OCH₂SiR²₂] present in the compounds used of formula IV, V, VI, VII or in a second compound of formula VIII assumes a value greater than the amount of substance of total structural units [O_{1/2}H] present in the compounds used of formula I and II.

11. Compounds of formula III having the structure **3,** 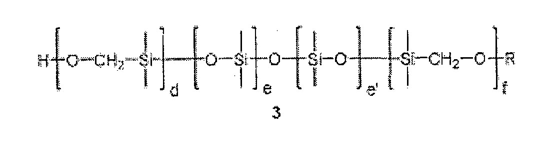 where d may assume whole-numbered values not less than 1, e may assume whole-numbered values not less than 0, e' may assume whole-numbered values not less than 0 and f may assume whole-numbered values of 0 or not less than 2, and where R may assume the meanings hydrogen, methyl, ethyl, n-propyl, isopropyl, n-butyl, sec-butyl, isobutyl, tert-butyl, n-pentyl, sec-pentyl (1-methylbutyl or 1-ethylpropyl), isopentyl (2-methylbutyl or 3-methylbutyl), neopentyl, tert-pentyl, n-hexyl, n-octyl, benzyl, phenyl, 2-methylphenyl, 3-methylphenyl, 4-methylphenyl, cyclopentyl or cyclohexyl, and where R in the case when f is unlike 0 denotes hydrogen, and where d in the case when e is 0 and e' is 0 and f is 0 may assume whole-numbered values not less than 2.

12. Compounds of formula III having the structure **4**, 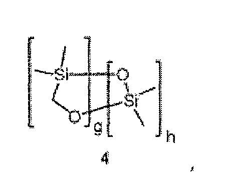 where g may assume whole-numbered values not less than 1 and h may assume whole-numbered values not less than 0 and the sum of g + h may assume whole-numbered values not less than 3.

13. Method for producing compounds of the structure **3** according to Claim 11, **characterized in that** compounds of structure **1**, **2**, 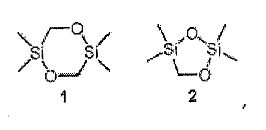 or **4** according to Claim 12, are reacted with water or alcohols.

14. Method for producing compounds of the structure **4** according to Claim 12, **characterized in that** compound **1** according to Claim 13 is stored or heated in the presence of an amount of substance of [Me₂SiO] equivalents which is at least equal to the sum of the amount of substance of [SiMe₂-O-] groups in the structure **4** compounds to be produced.

## Revendications

1. Procédé pour la préparation d'(hydroxyméthyl)polysiloxanes de formule générale I
(SiO_{4/2})ₖ(R¹SiO_{3/2})ₘ(R¹₂SiO_{2/2})ₚ(R¹₃SiO_{1/2})_{q} [O_{1/2}-(SiR²₂-X-Y-)ₐSiR²₂-CH₂-OH]ₛ[O_{1/2}H]ₜ Formule I,
dans lequel des organosiloxanes contenant du silanol de formule générale II
(SiO_{4/2})ₖ(R¹SiO_{3/2})ₘ(R¹₂SiO_{2/2})ₚ(R¹₃SiO_{1/2})_{q}[O_{1/2}H]ᵣ Formule II
sont transformés avec des composés cycliques ou acycliques qui présentent au moins une unité de formule générale III
Z- [O-CH₂-SiR²₂]ₙ-Y Formule III
où
**R¹** signifie un atome d'hydrogène ou un radical hydrocarboné en C₁-C₂₀ ou un radical hydrocarboné en C₁-C₂₀ à fonctionnalité oxy ou un radical polyéther en C₄-C₄₀, cycliques ou acycliques, linéaires ou ramifiés, aromatiques ou aliphatiques ou oléfiniques, saturés ou insaturés, le cas échéant substitués par **Q**¹, le cas échéant interrompus par un ou plusieurs groupes **Q**² contenant des hétéroatomes,
**R²** signifie un radical hydrocarboné en C₁-C₂₀ ou un radical hydrocarboné en C₁-C₂₀ à fonctionnalité oxy ou un radical polyéther en C₄-C₄₀ ou un radical siloxanyle en Si₁-Si₂₀, cycliques ou acycliques, linéaires ou ramifiés, aromatiques ou aliphatiques ou oléfiniques, saturés ou insaturés, le cas échéant substitués par **Q¹**, le cas échéant interrompus par un ou plusieurs groupes **Q²** contenant des hétéroatomes ou contenant un ou plusieurs groupes **Q²** contenant des hétéroatomes,
**Q¹** signifie un radical monovalent contenant des hétéroatomes,
**Q²** signifie un radical divalent contenant des hétéroatomes ou un radical trivalent contenant des hétéroatomes,
**Z** représente hydrogène, un groupe **X-SiR²₂-,** ou ensemble avec Y représente une paire d'électrons de liaison,
**X** représente un groupe R², un groupe siloxane ou une paire d'électrons de liaison avec Y ou peut être lié à Y ou X signifie, ensemble avec Y, un atome d'oxygène ou un atome d'oxygène lié à Y,
**Y** peut prendre des significations choisies parmi les significations de **R²** ou **Q¹** ou **Q²** ou représente un radical siloxane ou un groupe hydrolysable, y compris un groupe hydroxy, ou représente ensemble avec Z une paire d'électrons de liaison et peut être lié à Z via X et peut être interrompu par un ou plusieurs groupes siloxane le cas échéant substitués ou signifie ensemble avec X un atome d'oxygène,
à condition que **Y**, lorsque n = 1, représente un groupe hydrolysable ou un radical siloxane, qui comporte au moins un groupe hydrolysable, ou signifie ensemble avec X un atome d'oxygène ou est lié à X ou représente une liaison ensemble avec Z,
**s** vaut des valeurs d'au moins 1,
**r** vaut des valeurs d'au moins 1,
**t** vaut des valeurs d'au moins 0,
**n** vaut des valeurs d'au moins 1, la somme **s + t** vaut r,
**k, m, p, q** signifient des valeurs supérieures ou égales à zéro, à condition que la somme **k + m + p**
**+ q** vaille au moins 2, a vaut 0 ou 1.

2. Procédé pour la préparation d'(hydroxyméthyl)polysiloxanes selon la revendication 1, **caractérisé en ce qu'**on utilise, comme organosiloxanes ou résines d'organosiloxanes contenant du silanol de formule II, des composés selon la formule IIa ci-dessous
H [OSiR¹¹₂]_{α}OH Formule IIa,
où α vaut des valeurs entières de 2 à 20 000 et
**R¹¹** signifie méthyle, éthyle, vinyle, allyle ou phényle.

3. Procédé pour la préparation d' (hydroxyméthyl)polysiloxanes selon la revendication 1 ou 2, **caractérisé en ce qu'**on utilise comme composés de formule III des composés selon la formule IIIa suivante,
Z-[O-CH₂-SiR¹²₂]ₙ-Y Formule IIIa,
où **R¹²** peut prendre les significations méthyle, éthyle, vinyle, allyle, phényle, méthoxy, éthoxy, n-propoxy, iso-propoxy, n-butoxy, iso-butoxy, sec-butoxy, tert-butoxy, n-pentoxy, tert-pentoxy ou n-hexoxy,
et **n, Y** et **Z** peuvent prendre les mêmes significations que celles définies ci-dessus.

4. Procédé pour la préparation d'(hydroxyméthyl)polysiloxanes selon la revendication 1, **caractérisé en ce qu'**on prépare comme produit de formule I les composés suivants de formule Ia
HOCH₂SiR¹²₂[OSiR¹¹₂]_{α}OSiR¹²₂CH₂OH Formule Ia,
α signifiant des valeurs entières de 2 à 20 000 et R¹¹ et R¹² présentant les significations définies ci-dessus, les composés de formule IIa étant transformés avec des composés de formule IIIa.

5. Procédé pour la préparation d' (hydroxyméthyl)polysiloxanes selon l'une ou plusieurs des revendications précédentes, **caractérisé en ce qu'**au moins un des composés utilisés de formule III est choisi parmi les composés des formules générales IV, V, VI, VII ou VIII suivantes, 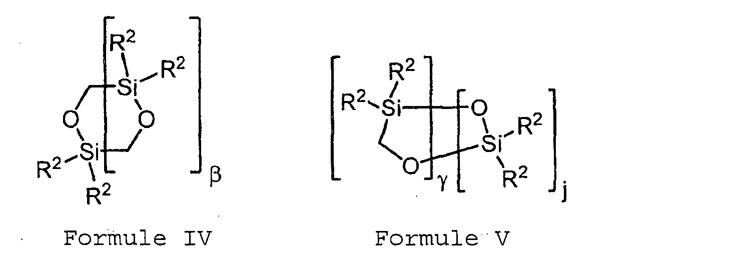 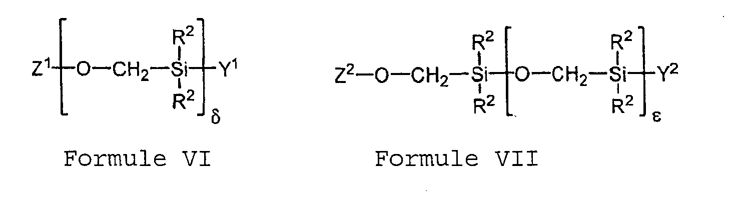
(SiO_{4/2})ₖ(R¹SiO_{3/2})ₘ(R¹₂SiO_{2/2})ₚ(R¹₃SiO_{1/2})_{q} [O_{1/2}-(SiR²₂-X-Y-)ₐ(SiR²₂-CH₂-O)ᵢZ³]ᵤ [O_{1/2}-(SiR²₂-X-Y-)ₐSiR²₂-CH₂-OZ³]ᵥ[O_{1/2}Z⁴]_{w} Formule VIII,
où
**R¹** dans la formule VIII peut prendre les mêmes significations que celles définies ci-dessus,
**R²** dans les formules IV-VIII peut prendre les mêmes significations que celles définies ci-dessus,
**ß, γ, δ, ε** peuvent prendre les mêmes significations que n telles que définies ci-dessus,
**i** peut prendre une valeur entière supérieure ou égale à 2,
**j** dans la formule V signifie une valeur entière supérieure ou égale à 0,
**k, m, p** et **q** et leur **somme** définie ci-dessus dans la formule VIII peuvent prendre les mêmes valeurs que celles définies ci-dessus,
**u** dans la formule VIII peut prendre une valeur supérieure ou égale à 1,
**v** dans la formule VIII peut prendre une valeur supérieure ou égale à 0,
**w** dans la formule VIII peut prendre une valeur supérieure ou égale à 0,
**Y¹** dans la formule VI représente un radical R², un radical -O-(SiR²₂-CH₂-O)_{b}Z¹, un atome d'hydrogène ou un groupe hydrolysable,
à condition que **Y¹,** lorsque δ dans la formule VI prend la signification 1, représente un groupe hydrolysable, y compris un groupe alcoxy, aryloxy, hydroxy ou un atome d'hydrogène, ou un radical -O-(SiR²₂-CH₂-O)_{b}H, b étant supérieur ou égal à 2,
**b** représente des valeurs supérieures ou égales à 1,
**Y²** dans la formule VII représente un radical R², un radical -O-(SiR²₂-CH₂-O)_{c}Z², un atome d'hydrogène ou un groupe hydrolysable y compris un groupe hydroxy,
**c** représente des valeurs supérieures ou égales à 1,
**Z¹** représente un atome d'hydrogène, un groupe silyle lié via un atome de silicium ou un groupe siloxanyle lié via un atome de silicium,
**Z²** représente un atome d'hydrogène, un groupe silyle lié via un atome de silicium, un groupe siloxanyle lié via un atome de silicium ou - lorsque ε dans la formule VII prend une valeur supérieure ou égale à 2 ou Y² représente un groupe hydrolysable - un groupe alkyle, aryle ou acyle, le cas échéant substitués par Q¹ ou interrompus par un ou plusieurs groupes Q²,
**Z³** représente un atome d'hydrogène, un groupe silyle lié via un atome de silicium, un groupe siloxanyle lié via un atome de silicium ou - lorsque i dans la formule VIII prend une valeur supérieure ou égale à 3 - un groupe alkyle, aryle ou acyle, le cas échéant substitués par Q¹ ou interrompus par un ou plusieurs groupes Q²,
**Z⁴** peut prendre les mêmes significations que Z¹,
**a** peut prendre les mêmes significations que celles définies ci-dessus.

6. Procédé selon l'une ou plusieurs des revendications précédentes, **caractérisé en ce qu'**au moins un des composés utilisés de formule III est choisi parmi les composés selon la formule IIIb suivante 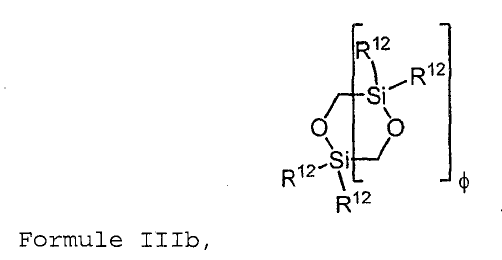 R¹² pouvant prendre les mêmes significations que celles définies ci-dessus et φ pouvant prendre des valeurs entières supérieures ou égales à 1.

7. Procédé selon l'une ou plusieurs des revendications 1 à 6, au moins un agent de silylation étant ajouté et le produit intermédiaire silylé formé étant transformé par solvolyse avec des composés protiques en composés de formule I.

8. Procédé selon l'une ou plusieurs des revendications 1 à 6, au moins un des composés concernés étant transformé avec un agent de silylation qui présente la structure R¹₃Si-AG, le groupe AG représentant un groupe partant hydrolysable.

9. Procédé selon l'une ou plusieurs des revendications précédentes, un excès de composés de formule III étant utilisé et des composés formés comme produit intermédiaire de formule VIII étant transformés par solvolyse avec des composés protiques ou par thermolyse, partiellement ou complètement, en composés de formule I, excès signifiant que la quantité des unités de structure [OCH₂SiR²₂] présentes au total dans les composés de formule III utilisés prend une valeur supérieure à la quantité des unités de structure [O_{1/2}H] présentes au total dans les composés de formule I utilisés.

10. Procédé pour la préparation de composés de formule générale VIII utilisables dans un procédé selon l'une quelconque des revendications 1 à 9, **caractérisé en ce qu'**on transforme des mélanges contenant au moins un composé de formule générale II ou de formule générale I avec un excès de composés de formules IV, V, VI, VII ou d'un deuxième composé de formule VIII, excès signifiant que la quantité des unités de structure [OCH₂SiR²₂] présentes au total dans les composés de formules IV, V, VI, VII utilisés ou dans un deuxième composé de formule VIII est supérieure à la quantité des unités de structure [O_{1/2}H] présentes au total dans les composés de formules I et II utilisés.

11. Composés de formule III de structure 3, 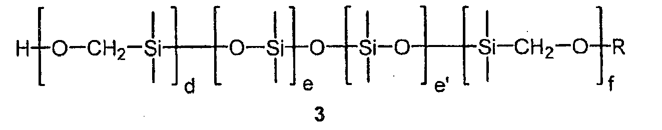 d pouvant prendre des valeurs entières supérieures ou égales à 1, e pouvant prendre des valeurs entières supérieures ou égales à 0, e' pouvant prendre des valeurs entières supérieures ou égales à 0 et f pouvant prendre des valeurs entières de 0 ou supérieures ou égales à 2, et R pouvant prendre les significations hydrogène, méthyle, éthyle, n-propyle, iso-propyle, n-butyle, sec-butyle, iso-butyle, tert-butyle, n-pentyle, sec-pentyle (1-méthylbutyle ou 1-éthylpropyle), iso-pentyle (2-méthylbutyle ou 3-méthylbutyle), néo-pentyle, tert-pentyle, n-hexyle, n-octyle, benzyle, phényle, 2-méthylphényle, 3-méthylphényle, 4-méthylphényle, cyclopentyle ou cyclohexyle, et R, lorsque f est différent de 0, signifiant hydrogène et d, lorsque e vaut 0 et e' vaut 0 et f vaut 0, pouvant prendre des valeurs entières supérieures ou égales à 2.

12. Composés de formule III de structure **4,** 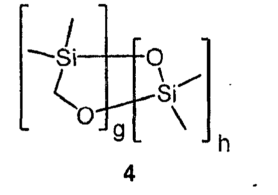 g pouvant prendre des valeurs supérieures ou égales à 1 et h pouvant prendre des valeurs entières supérieures ou égales à 0 et la somme de g + h pouvant prendre des valeurs entières supérieures ou égales à 3.

13. Procédé pour la préparation de composés de structure **3** selon la revendication 11, **caractérisé en ce que** des composés de structure **1, 2,** 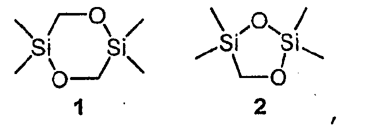 ou **4** selon la revendication 12 sont transformés avec de l'eau ou des alcools.

14. Procédé pour la préparation de composés de structure **4** selon la revendication 12, **caractérisé en ce que** le composé **1** selon la revendication 13 est entreposé ou chauffé, en présence d'une quantité d'équivalents [Me₂SiO] qui correspond au moins à la somme des quantités de groupes [SiMe₂-O-] dans les composés à préparer de structure **4.**
